(19) Europäisches Patentamt
European Patent Office
Office européen des brevets

(11) **EP 4 756 960 A1**

(12) **EUROPEAN PATENT APPLICATION**

(43) Date of publication:
**10.06.2026 Bulletin 2026/24**

(21) Application number: **25220232.0**

(22) Date of filing: **02.12.2025**

(51) International Patent Classification (IPC):
***H01M 10/052*** (2010.01)    ***H01M 10/0562*** (2010.01)

(52) Cooperative Patent Classification (CPC):
**H01M 10/052; H01M 10/0562;** H01M 2300/0068;
H01M 2300/0094

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.12.2024 KR 20240177908**

(71) Applicant: SAMSUNG SDI CO., LTD.
**Yongin-si, Gyeonggi-do 17084 (KR)**

(72) Inventors:
• LEE, Myungjin
  **16678 Suwon-si (KR)**

• KIM, Mokwon
  **16678 Suwon-si (KR)**
• PARK, Bumwoo
  **16678 Suwon-si (KR)**
• YOON, Kyungho
  **16678 Suwon-si (KR)**
• KU, Junhwan
  **16678 Suwon-si (KR)**
• HWANG, Seungsik
  **16678 Suwon-si (KR)**

(74) Representative: **Elkington and Fife LLP**
**Prospect House**
**8 Pembroke Road**
**Sevenoaks, Kent TN13 1XR (GB)**

(54) **SOLID BATTERY AND PREPARATION METHOD OF SOLID BATTERY**

(57) A solid battery, and a method of preparing a solid battery. The solid battery includes: a cathode; an anode; and a solid electrolyte layer between the cathode and the anode. The solid electrolyte layer comprises one or a plurality of sub-solid electrolyte layers. The solid electrolyte layer comprises an interlayer between the plurality of sub-solid electrolyte layers or does not comprise the interlayer. At least one of the sub-solid electrolyte layer and the interlayer comprises a tackifier. The tackifier comprises a hydrocarbonaceous oligomer derived from an aliphatic chain monomer having 5 carbon atoms to 20 carbon atoms, an aromatic ring monomer having 6 carbon atoms to 20 carbon atoms, an aliphatic ring monomer having 5 carbon atoms to 20 carbon atoms, or a combination thereof.

FIG. 1

EP 4 756 960 A1

**Description**

FIELD OF THE INVENTION

The disclosure relates to a solid battery, and a method of preparing a solid battery.

BACKGROUND OF THE INVENTION

Lithium batteries may include liquid electrolytes containing flammable organic solvents, and therefore, the batteries may present a risk of overheating and fire in the event of a short circuit. Considering this issue, lithium batteries using solid electrolytes rather than liquid electrolytes have been proposed.

During the manufacturing process of lithium batteries containing liquid electrolytes, the injection of the liquid electrolyte into the lithium battery allows the electrolyte to penetrate into the electrodes, thereby reducing the interfacial resistance between the electrodes and the liquid electrolyte. In contrast, in the manufacturing process of lithium batteries containing solid electrolytes an application of high pressure to the lithium battery may reduce the interfacial resistance between the electrodes and the solid electrolyte.

SUMMARY OF THE INVENTION

Provided is a solid battery comprising an electrolyte layer having increased ionic conductivity and reduced internal resistance, by having improved bonding strength and tackiness.

Provided is a method of preparing a solid battery including the solid electrolyte layer.

According to an aspect of the disclosure, a solid battery includes:

a cathode; an anode; and a solid electrolyte layer between the cathode and the anode,
wherein the solid electrolyte layer comprises one or a plurality of sub-solid electrolyte layers,
wherein the solid electrolyte layer comprises an interlayer between the plurality of sub-solid electrolyte layers or does not comprise the interlayer,
wherein at least one of the sub-solid electrolyte layer and the interlayer comprises a tackifier,
the tackifier comprises a hydrocarbonaceous oligomer derived from an aliphatic chain monomer having 5 carbon atoms to 20 carbon atoms, an aromatic ring monomer having 6 carbon atoms to 20 carbon atoms, an aliphatic ring monomer having 5 carbon atoms to 20 carbon atoms, or a combination thereof.

According to another aspect of the disclosure, a method of preparing a solid battery includes:

providing a first laminate including a cathode and a first solid electrolyte layer on the cathode, and a second laminate including an anode and a second solid electrolyte layer on the anode;
providing an interlayer on one or more surfaces of the first solid electrolyte layer of the first laminate and the second solid electrolyte layer of the second laminate;
stacking the first laminate and the second laminate such that the first solid electrolyte layer of the first laminate and the second solid electrolyte layer of the second laminate face the other to provide a third laminate; and
applying pressure to the third laminate to manufacture the solid battery, wherein the interlayer includes a tackifier.

According to another aspect of the disclosure, a method of preparing a solid battery includes:

providing a first laminate including a cathode and a third solid electrolyte layer on the cathode, and a second laminate including an anode and a fourth solid electrolyte layer on the anode;
stacking the first laminate and the second laminate such that the third solid electrolyte layer of the first laminate and the fourth solid electrolyte layer of the second laminate face the other to provide a third laminate; and
applying pressure to the third laminate to prepare the solid battery, wherein one or more of the third solid electrolyte layer and the fourth solid electrolyte layer include a tackifier.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a cross-sectional schematic view of a solid electrolyte layer including a first structure according to an embodiment;

FIG. 2 is a cross-sectional schematic view of a solid electrolyte layer including a first structure according to another embodiment;

FIG. 3 is a cross-sectional schematic view of a solid electrolyte layer including a second structure according to an embodiment;

FIG. 4 is a cross-sectional schematic view of a solid electrolyte layer including a second structure according to another embodiment;

FIG. 5 is a cross-sectional schematic view of a solid electrolyte layer including a third structure according to an embodiment;

FIG. 6 is a cross-sectional schematic view of a solid electrolyte layer including a third structure according to another embodiment;

FIG. 7 is a cross-sectional schematic view of a solid battery including the solid electrolyte layer of FIG. 1;

FIG. 8 is a cross-sectional schematic view of a solid battery including the solid electrolyte layer of FIG. 2;

FIG. 9 is a cross-sectional schematic view of a solid battery including the solid electrolyte layer of FIG. 3;

FIG. 10 is a cross-sectional schematic view of a solid battery including the solid electrolyte layer of FIG. 5;

FIG. 11 is a cross-sectional schematic view of a solid battery including a solid electrolyte layer;

FIG. 12 is a cross-sectional schematic view of a solid battery including a solid electrolyte layer and a metal layer;

FIGS. 13A to 13G are cross-sectional views showing a method of preparing a solid battery according to an embodiment; and

FIG. 14 is a graph showing the capacity variation of a solid battery prepared in Example 3 during charge and discharge cycles.

## DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects.

The terminology used herein is for the purpose of describing particular embodiments only and is not intended to be limiting. As used herein, the term "and/or" includes any and all combinations of one or more of the associated listed items. Expressions such as "at least one of," when preceding a list of elements, modify the entire list of elements and do not modify the individual elements of the list.

Various embodiments have been illustrated in the accompanying drawings. However, the inventive concept may be embodied in many other forms and should not be construed as limited to the embodiments described herein. Rather, these embodiments are provided so that the disclosure may be thorough and complete and to fully convey the scope of the inventive concept to those skilled in the art.

Embodiments are described in the disclosure with reference to cross-sectional views of idealized embodiments. For example, variations from the shape of the drawing may be expected as a result of manufacturing techniques and/or tolerances. Therefore, the embodiments described in the disclosure should not be construed as being limited to the specific shapes of regions as depicted in the drawings of the disclosure, but should include, for example, deviations in shapes resulting from manufacturing. For example, regions illustrated or described as being flat may be rough and/or include nonlinear features. Also, the sharply illustrated angles may be rounded. Accordingly, the regions depicted in the drawings are inherently schematic, and their shapes are not intended to depict the precise shape of the regions or to limit the scope of the disclosure. In the disclosure, the same reference numerals refer to the same components.

Terms such as "first," "second," and "third" may be used herein to describe various components, ingredients, regions, layers, and/or zones, but are not limited by these terms. These terms are used only to distinguish one component, ingredient, region, layer or zone from another component, ingredient, region, layer or zone. Accordingly, a first component, ingredient, region, layer or zone described below may be referred to as a second component, ingredient, region, layer or zone without departing from the teachings of this disclosure.

It may be understood that when an element is referred to as being "on" another element, it may be directly on top of the other element, or there may be other elements intervening between them. In contrast, when an element is said to be "directly on" another element, there are no intervening elements between them.

As used herein, the singular forms "a," "an," and "the" are intended to include the plural forms, including "at least one," unless the context clearly dictates otherwise. The wording "at least one" should not be construed as limited to being singular. As used herein, the term "and/or" includes any and all combinations of one or more of the listed items. When used in the detailed description, the terms "includes" and/or "including" specify the presence of the stated features, regions, integers, steps, operations, elements, components and/or ingredients, but do not preclude the presence or addition of one or more other features, regions, integers, steps, operations, elements, components and/or groups thereof.

Unless otherwise defined, all terms (including technical and scientific terms) as used herein have the same meaning as commonly understood by one of ordinary skill in the art to which this disclosure belongs. Additionally, terms defined in commonly used dictionaries should be interpreted as having a meaning consistent with their meaning within the context of the relevant art and the disclosure, and not in an idealized or overly formal sense.

As used herein, "group" means a group of the Periodic Table of the Elements according to the International Union of Pure and Applied Chemistry ("IUPAC") 1-18 Group classification system.

As used herein, the "particle diameter" indicates an average diameter of the particle when the particle is spherical, or indicates an average major axis length of the particle when the particle is non-spherical. The particle diameter of the particles may be measured using a particle size analyzer (PSA). The "particle diameter" is, for example, an average particle diameter. The average particle diameter is, for example, the median particle diameter (D50).

As used herein, "metal" includes both metals and metalloids such as silicon and germanium, in elemental or ionic states.

As used herein, "alloy" means a metallic material comprising two or more elements, at least one of which is a metal as defined herein.

As used herein, "electrode active material" refers to an electrode material capable of undergoing lithiation and delithiation.

As used herein, "cathode active material" refers to a cathode material capable of undergoing lithiation and delithiation.

As used herein, "anode active material" refers to an anode material capable of undergoing lithiation and delithiation.

As used herein, "lithiation" and "to lithiate" refers to a process of adding lithium to an electrode active material.

As used herein, "delithiation" and "to delithiate" refers to a process of removing lithium from an electrode active material.

As used herein, "charging" and "to charge" refers to a process of providing electrochemical energy to a battery.

As used herein, "discharging" and "to discharge" refers to a process of removing electrochemical energy from a battery.

As used herein, "positive electrode" and "cathode" refer to an electrode at which electrochemical reduction and lithiation occur during a discharge process.

As used herein, "negative electrode" and "anode" refer to an electrode at which electrochemical oxidation and delithiation occur during a discharge process.

As used herein, "free of a tackifier" or "free of the tackifier" refers to a material or substance that does not contain an experimentally detectable amount of tackifier.

Although specific embodiments have been described, alternatives, modifications, variations, improvements, and substantial equivalents that may not currently be anticipated or foreseeable could arise for the applicant or those skilled in the art. Therefore, the appended claims, as filed and as amended, are intended to encompass all such alternatives, modifications, variations, improvements, and substantial equivalents.

Because liquid electrolytes are in a liquid state such electrolytes may readily accommodate volume changes in lithium batteries during the charge and discharge cycles. Accordingly, in lithium batteries containing liquid electrolytes, the possibility of pore formation, cracking, and electrical disconnection in the electrolyte layer due to volume changes during the charge and discharge cycles is relatively low. In contrast, lithium batteries that utilize solid electrolytes may have difficulty accommodating volume changes during the charge and discharge cycles. In particular, in lithium batteries that utilize solid electrolytes the likelihood of pore formation, cracking, and electrical disconnection in the electrolyte layer due to volume changes during the charge and discharge cycles is relatively likely. Accordingly, there is a need to effectively suppress the pore formation, cracking, and electrical disconnection due to volume changes in a lithium battery during the charge and discharge cycles in a lithium battery containing a solid electrolyte.

Hereinafter, a solid battery according to embodiments, and a preparation method of a solid battery are described in more detail.

Solid Battery

According to an embodiment, a solid battery may include a cathode; an anode; and a solid electrolyte layer between the cathode and the anode. The solid electrolyte layer comprises one or a plurality of sub-solid electrolyte layers. The solid electrolyte layer comprises an interlayer between the plurality of sub-solid electrolyte layers or does not comprise the interlayer. At least one of the sub-solid electrolyte layer and the interlayer comprises a tackifier. The tackifier comprises a hydrocarbonaceous oligomer derived from an aliphatic chain monomer having 5 carbon atoms to 20 carbon atoms, an aromatic ring monomer having 6 carbon atoms to 20 carbon atoms, an aliphatic ring monomer having 5 carbon atoms to 20 carbon atoms, or a combination thereof. The tackifier may comprise a hydrocarbonaceous oligomer derived from an aliphatic chain monomer having 5 carbon atoms to 20 carbon atoms, an aromatic ring monomer having 9 carbon atoms to 20 carbon atoms, an aliphatic ring monomer having 10 carbon atoms to 20 carbon atoms, or a combination thereof. The sub-solid electrolyte layer includes a first solid electrolyte layer, a second solid electrolyte layer, a third solid electrolyte layer, a fourth solid electrolyte layer and a fifth solid electrolyte layer. The solid electrolyte layer may include a first structure including a first solid electrolyte layer, a second solid electrolyte layer, and a first interlayer therebetween. The solid electrolyte layer may include a second structure including a third solid electrolyte layer and a fourth solid electrolyte layer. The solid electrolyte layer may include a third structure including a fifth solid electrolyte layer. In the first structure, for example, the interlayer may include a tackifier. In the second structure, for example, one or both of the third solid electrolyte layer and the fourth solid electrolyte layer may include a tackifier. In the third structure, for example, the fifth solid electrolyte layer may include a tackifier. The tackifier, for example, may include an organic tackifier. The tackifier, for example, may not include an inorganic tackifier.

By including a tackifier in a solid electrolyte layer, the viscoelasticity and/or restoring force of the solid electrolyte layer may be improved. By including a tackifier in a solid electrolyte layer, the bonding strength between the solid electrolyte layer and the cathode and/or the anode may be improved. By including a tackifier in a solid electrolyte layer, the bonding strength between a plurality of sub-solid electrolyte layers included in the solid electrolyte layer may be improved. By including a tackifier in a solid electrolyte layer, the porosity within the solid electrolyte layer may be reduced. By including a tackifier in a solid electrolyte layer, the occurrence of pores, cracks, or electrical disconnections inside the solid electrolyte layer during the charge and discharge cycles of a solid battery may be suppressed. The charge and discharge characteristics of a solid battery including a solid electrolyte layer may be enhanced.

The tackifier may include a mixture of a plurality of hydrocarbonaceous oligomers having different structures. The tackifier may include a mixture of 3 or more, 5 or more, 7 or more, or 10 or more hydrocarbonaceous oligomers having different structures. By including the tackifier comprising a mixture of a plurality of hydrocarbonaceous oligomers having different structures in the solid electrolyte layer, the viscoelasticity and/or restoring force of the solid electrolyte layer may be improved.

Numbers of the repeating unit in the hydrocarbonaceous oligomer may be 100 or less, 50 or less, 30 or less, 25 or less, 20 or less, 15 or less, or 10 or less. Numbers of the repeating unit in the hydrocarbonaceous oligomer may be 2 to 100, 2 to 50, 2 to 30, 2 to 25, 2 to 20, 2 to 15, or 2 to 10. By having numbers of the repeating unit in the hydrocarbonaceous oligomer within these ranges stated above, the viscoelasticity and/or restoring force of the solid electrolyte layer may be improved.

The tackifier may further include unreacted monomer comprising an aliphatic chain monomer having 5 carbon atoms to 20 carbon atoms, an aromatic ring monomer having 6 carbon atoms to 20 carbon atoms, an aliphatic ring monomer having 5 carbon atoms to 20 carbon atoms, or a combination thereof. An amount of the unreacted monomer in the tackifier may be about 0.1 wt% or more, about 0.5 wt% or more, or about 1 wt% or more, based on the total weight of the tackifier. An amount of the unreacted monomer in the tackifier may be about 0.1 wt% to about 10 wt%, about 0.5 wt% to 8 wt%, or about 1 wt% to about 5 wt%, based on the total weight of the tackifier.

The tackifier for example may include i) an unsaturated aliphatic hydrocarbon chain monomer having 5 carbon atoms to 20 carbon atoms, an oligomer of the unsaturated aliphatic hydrocarbon chain monomer having 5 carbon atoms to 20 carbon atoms, or a combination thereof. The tackifier for example may include i-1) an hydrogenate of the unsaturated aliphatic hydrocarbon chain monomer having 5 carbon atoms to 20 carbon atoms, an hydrogenate of the oligomer of the unsaturated aliphatic hydrocarbon chain monomer having 5 carbon atoms to 20 carbon atoms, or a combination thereof. The tackifier for example may include ii) an unsaturated aromatic hydrocarbon ring monomer having 6 carbon atoms to 20 carbon atoms, an oligomer of the unsaturated aromatic hydrocarbon ring monomer having 6 carbon atoms to 20 carbon atoms, an unsaturated aromatic hydrocarbon ring monomer having 9 carbon atoms to 20 carbon atoms, an oligomer of the unsaturated aromatic hydrocarbon ring monomer having 9 carbon atoms to 20 carbon atoms, or a combination thereof. The tackifier for example may include ii-1) an hydrogenate of the unsaturated aromatic hydrocarbon ring monomer having 6 carbon atoms to 20 carbon atoms, an hydrogenate of the oligomer of the unsaturated aromatic hydrocarbon ring monomer having 6 carbon atoms to 20 carbon atoms, an hydrogenate of the unsaturated aromatic hydrocarbon ring monomer having 9 carbon atoms to 20 carbon atoms, an hydrogenate of the oligomer of the unsaturated aromatic hydrocarbon ring monomer having 9 carbon atoms to 20 carbon atoms, or a combination thereof. The tackifier for example may include iii) an unsaturated aliphatic hydrocarbon ring monomer having 5 carbon atoms to 20 carbon atoms, an oligomer of the unsaturated aliphatic hydrocarbon ring monomer having 5 carbon atoms to 20 carbon atoms, an unsaturated aliphatic hydrocarbon ring monomer having 10 carbon atoms to 20 carbon atoms, an oligomer of the unsaturated aliphatic hydrocarbon ring monomer having 10 carbon atoms to 20 carbon atoms, or a combination thereof. The tackifier for example may include iii-1) an hydrogenate of the unsaturated aliphatic hydrocarbon ring monomer having 5 carbon atoms to 20 carbon atoms, an hydrogenate of the oligomer of the unsaturated aliphatic hydrocarbon ring monomer having 5 carbon atoms to 20 carbon atoms, an hydrogenate of the unsaturated aliphatic hydrocarbon ring monomer having 10 carbon atoms to 20 carbon atoms, an hydrogenate of the oligomer of the unsaturated aliphatic hydrocarbon ring monomer having 10 carbon atoms to 20 carbon atoms, or a combination thereof. By including these tackifier in solid battery, an internal resistance of the solid battery may be decreased, and charge and discharge characteristics of a solid battery may be enhanced.

The tackifier for example may include i) trans-1,3-pentadiene, oligomer of trans-1,3-pentadiene, cis-1,3-pentadiene, oligomer of cis-1,3-pentadiene, 2-methyl-2-butene, oligomer of 2-methyl-2-butene, or a combination thereof. The tackifier for example may include i-1) hydrogenate of trans-1,3-pentadiene, hydrogenate of oligomer of trans-1,3-pentadiene, hydrogenate of cis-1,3-pentadiene, hydrogenate of oligomer of cis-1,3-pentadiene, hydrogenate of 2-methyl-2-butene, hydrogenate of oligomer of 2-methyl-2-butene, or a combination thereof. The tackifier for example may include ii) styrene, oligomer of styrene, alpha-methylstyrene, oligomer of alpha-methylstyrene, vinyltoluene, oligomer of vinyltoluene, indene, oligomer of indene, or a combination thereof. The tackifier for example may include ii-1) hydrogenate of styrene, hydrogenate of oligomer of styrene, hydrogenate of alpha-methylstyrene, hydrogenate of oligomer of alpha-methylstyrene, hydrogenate of vinyltoluene, hydrogenate of oligomer of vinyltoluene, hydrogenate of indene, hydrogenate of oligomer of indene, or a combination thereof. The tackifier for example may include iii) cyclopentene, oligomer of cyclopentene, cyclopentadiene, oligomer of cyclopentadiene, dicyclopentadiene, oligomer of dicyclopentadiene, or a combination thereof. The tackifier for example may include iii-1) hydrogenate of cyclopentene, hydrogenate of oligomer of cyclopentene, hydrogenate of cyclopentadiene, hydrogenate of oligomer of cyclopentadiene, hydrogenate of dicyclopentadiene, hydrogenate of oligomer of dicyclopentadiene, or a combination thereof. By including these tackifier in solid battery, an internal resistance of the solid battery may be decreased, and charge and discharge characteristics of a solid battery may be enhanced. The tackifier may be free of oxygen, nitrogen, fluorine, chlorine, sulfur, phosphorous, or a combination thereof.

The tackifier may include, for example, a ring repeating unit including an aliphatic hydrocarbon ring, a ring repeating unit including an aromatic hydrocarbon ring, or a combination thereof. The organic tackifier may include, for example, a ring repeating unit including an aliphatic hydrocarbon ring having about 5 carbon atoms to about 20 carbon atoms, a ring repeating unit comprising an aromatic hydrocarbon ring having about 6 carbon atoms to about 20 carbon atoms, or a combination thereof. The aliphatic hydrocarbon ring may include, for example, a saturated aliphatic hydrocarbon ring having about 5 carbon atoms to about 20 carbon atoms, an unsaturated aliphatic hydrocarbon ring having about 5 carbon atoms to about 20 carbon atoms, or a combination thereof. By including such repeating units in the tackifier, the tackiness of the organic tackifier may be further improved.

The tackifier may further include a chain repeating unit including, for example, an aliphatic hydrocarbon chain having about 4 carbon atoms to about 20 carbon atoms. The aliphatic chain having about 4 carbon atoms to about 20 carbon atoms may include, for example, a saturated aliphatic hydrocarbon chain having about 4 carbon atoms to about 20 carbon atoms, an unsaturated aliphatic hydrocarbon chain having about 4 carbon atoms to about 20 carbon atoms, or a combination thereof. By further including a chain repeating unit including an aliphatic hydrocarbon chain having about 4 carbon atoms to about 20 carbon atoms in the tackifier, the tackiness of the tackifier may be further improved.

The tackifier may, for example, include repeating units derived from unsaturated hydrocarbon monomers. The unsaturated hydrocarbon monomer may include, for example, an aliphatic monomer, an aromatic monomer, or a combination thereof. The aliphatic monomer may include, for example, an aliphatic chain monomer, an aliphatic ring monomer, or a combination thereof. The unsaturated hydrocarbon monomer may include, for example, an aliphatic monomer having about 4 carbon atoms to about 20 carbon atoms, an aromatic monomer having about 6 carbon atoms to about 20 carbon atoms, or a combination thereof. The aliphatic monomer having about 4 carbon atoms to about 20 carbon atoms may include, for example, an aliphatic chain monomer having about 4 carbon atoms to about 20 carbon atoms, an aliphatic ring monomer having about 5 carbon atoms to about 20 carbon atoms, or a combination thereof.

The tackifier may include at least one or more repeating units of, for example, a first repeating unit, a second repeating unit, or a third repeating unit. The repeating unit may be derived from, for example, piperylene, isoprene, 2-methyl-2-butene or a combination thereof. The second repeating unit may be derived from, for example, cyclopentene, cyclopentadiene (CPD), dicyclopentadiene (DCPD), or a combination thereof. The third repeating unit may be derived from, for example, styrene, alpha-methylstyrene, vinyltoluene, indene or a combination thereof.

The unsaturated hydrocarbon monomers may include, for example, byproducts of naphtha cracking. The unsaturated hydrocarbon monomer may include, for example, a C5 fraction, a C9 fraction, a naphtha cracking by-product, dicyclopentadiene (DCPD), or a combination thereof. The C5 fraction may include, for example, an unsaturated C5 fraction, an unsaturated C6 fraction, or a combination thereof. The C9 fraction may include, for example, an unsaturated aromatic C8 fraction, an unsaturated aromatic C9 fraction, an unsaturated aromatic C10 fraction, or a combination thereof.

The tackifier may include, for example, a hydrocarbon resin. The hydrocarbon resin may include, for example, a hydrogenated hydrocarbon resin, a non-hydrogenated hydrocarbon resin, or a combination thereof. The hydrocarbon resin may, for example, include repeating units derived from multiple monomers. The hydrocarbon resin may include repeating units derived from, for example, a combination of three or more different monomers, a combination of four or more different monomers, a combination of five or more different monomers, a combination of seven or more different monomers or a combination of ten or more different monomers.

The hydrocarbon resin may include, for example, a C5 resin derived from a C5 fraction, an acid modified C5 resin, a C9 resin derived from a C9 fraction, a phenol modified C9 resin, a C5-C9 copolymer resin, a DCPD resin derived from dicyclopentadiene (DCPD), a DCPD-C9 copolymer resin, a DCPD-C5 copolymer resin, a hydrogenated C5 resin, a hydrogenated acid modified C5 resin, a hydrogenated C9 resin, a hydrogenated phenol modified C9 resin, a hydrogenated C5-C9 copolymer resin, a hydrogenated DCPD resin, a hydrogenated DCPD-C9 copolymer resin, a hydrogenated DCPD-C5 copolymer resin or a combination thereof.

The hydrocarbon resin may include, for example, a C5-C9 copolymer resin derived from a C5 fraction and a C9 fraction. The C9 fraction content may be, for example, 10 weight percent (wt%) or more, 20 wt% or more, 30 wt% or more, or 50 wt% or more relative to the total C5 fraction and C9 fraction. The C9 fraction content may be, for example, about 10 wt% to about 90 wt%, about 20 wt% to about 90 wt%, about 30 wt% to about 90 wt% or about 50 wt% to about 90 wt% relative to the total C5 fraction and C9 fraction. By having a high C9 fraction content, the cycle characteristics of a solid battery employing a solid electrolyte layer (30) including a hydrocarbon resin may be further improved.

The tackifier may be amorphous. The tackifier may include an amorphous hydrocarbonaceous oligomer. The amorphous nature may be measured, for example, by X-ray diffraction (XRD). The tackifier may include the hydrocarbonaceous oligomer having a molecular weight of less than about 10,000 Dalton. The molecular weight of the tackifier may be, for example, less than about 10,000 Dalton, about 8000 Dalton or less, about 5000 Dalton or less, or about 3000 Dalton or less. The molecular weight of the tackifier may be, for example, about 100 Dalton to about 10000 Dalton, about 300 Dalton to about 8000 Dalton, about 500 Dalton to about 5000 Dalton or about 500 Dalton to about 3000 Dalton. The molecular weight of a tackifier may be measured using gel permeation chromatography with polystyrene standard sample. The molecular weight of a tackifier may a weight average molecular weight. By having a molecular weight within these ranges stated above, the tackifier may provide excellent tackiness. A tackifier with this molecular weight range may be easily mixed with a binder, thereby more effectively enhancing the binder's bonding strength.

The tackifier may include the hydrocarbonaceous oligomer having a softening point measured according to ASTM E 28 of about 190 °C or less, about 180 °C or less, about 160 °C or less, about 140 °C or less, or about 120 °C or less. The softening point of the tackifier as measured according to ASTM E 28 may be, for example, from about 0 °C to about 190 °C, from about 0 °C to about 180 °C, from about 0 °C to about 160 °C, from about 80 °C to about 140 °C, or from about 80 °C to about 120 °C. By having a softening point of the tackifier within these ranges, the viscoelasticity of the interlayer may be more effectively increased.

The tackifier may include the hydrocarbonaceous oligomer having a glass transition temperature of less than about 160 °C. The glass transition temperature of the tackifier may be, for example, about 30 °C to about 160 °C. By having a glass transition temperature within this range, the tackifier may be more effectively mixed with the binder. The glass transition temperature may be measured, for example, using differential scanning calorimetry (DSC).

At 25 °C and 1 atmosphere (atm), the tackifier may exist as either a liquid, or a solid. A liquid tackifier may be easily mixed with a binder. A solid tackifier may be dissolved in a solvent to facilitate mixing with a binder.

The interlayer may further include a binder. The binder may be a polymer including, for example, carbon, hydrogen and heteroatoms. The heteroatom may include, for example, oxygen, nitrogen, fluorine, chlorine, sulfur (S), phosphorus (P), or a combination thereof. The molecular weight of the binder may be, for example, 100,000 Dalton or more, 150,000 Dalton or more, 200,000 Dalton or more, 300,000 Dalton or more, or 500,000 Dalton or more. By having a molecular weight within this range, the binder may provide excellent bonding strength. The molecular weight of the binder may be measured, for example, using gel permeation chromatography with polystyrene standard sample.

Examples of the binder may include nitrile rubber (NR), nitrile-butadiene rubber (NBR), nitrile-isoprene rubber (NIR), polydimethylsiloxane (PDMS), ethylene vinyl acetate (EVA), polytetrafluoroethylene (PTFE), polyvinylidene fluoride (PVDF), polyvinylidene fluoride-hexafluoropropylene copolymer (PVDF-HFP), polyacrylonitrile (PAN), polyalkyl acrylate, polymethyl methacrylate (PMMA), polyvinyl alcohol (PVA) or a combination thereof.

First structure

A solid electrolyte layer according to an embodiment may include a first structure. The first structure may include a first solid electrolyte layer, a second solid electrolyte layer, and a first interlayer disposed between the first solid electrolyte layer and the second solid electrolyte layer. The first interlayer may include a binder and a tackifier.

By including a binder and a tackifier in the first interlayer, the bonding strength between the first solid electrolyte layer and the second solid electrolyte layer may be improved. By additionally imparting tackiness to a binder with bonding strength through the inclusion of a tackifier, the adhesive bonding strength of the binder may be further enhanced. By including a binder and a tackifier in the first interlayer, the bonding intensity between the first solid electrolyte layer and the second solid electrolyte layer may be improved. For example, the peel strength between the first solid electrolyte layer and the second solid electrolyte layer may be improved. By including a binder and a tackifier in the first interlayer, tackiness may be imparted between the first solid electrolyte layer and the second solid electrolyte layer. By disposing the first interlayer between the first solid electrolyte layer and the second solid electrolyte layer, the first solid electrolyte layer and the second solid electrolyte layer may be into close contact, leading to a reduction in porosity between them. The interfacial resistance between the first solid electrolyte layer and the second solid electrolyte layer may be reduced. The internal resistance of a solid electrolyte layer including the first structure may be reduced. By imparting enhanced bonding strength and/or tackiness between the first solid electrolyte layer and the second solid electrolyte layer through the first interlayer, the viscoelasticity and/or restoring force of the solid electrolyte layer may be improved. By providing enhanced bonding strength and/or tackiness between the first solid electrolyte layer and the second solid electrolyte layer through the first interlayer, the formation of pores, cracks, or electrical disconnections between the first solid electrolyte layer and the second solid electrolyte layer during the charge and discharge cycles of the solid secondary battery may be suppressed. By providing enhanced bonding strength and/or tackiness between the first solid electrolyte layer and the second solid electrolyte layer through the first interlayer, the volume change of the solid secondary battery during the charge and discharge cycles may be more effectively suppressed. By having enhanced tackiness and/or bonding strength between the first solid electrolyte layer and the second solid electrolyte layer through the first interlayer, degradation due to volume changes in the solid secondary battery during the charge and discharge cycles may be more effectively mitigated. By having enhanced tackiness and/or bonding strength between the first solid electrolyte layer and the second solid electrolyte layer through the first interlayer, increases in interfacial resistance and/or internal resistance of the solid electrolyte layer during the charge and discharge cycles may be suppressed. As a result, the charge and discharge characteristics of a solid secondary battery may be enhanced.

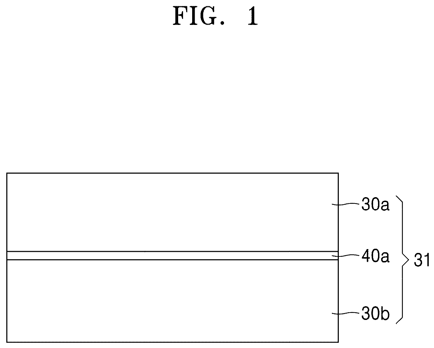

FIG. 1 is a cross-sectional schematic view of a solid electrolyte layer including a first structure according to an embodiment.

Referring to FIG. 1, a solid electrolyte layer may include a first structure 31. The first structure 31 may include a first solid electrolyte layer 30a, a second solid electrolyte layer 30b, and an interlayer 40a disposed between the first solid electrolyte layer 30a and the second solid electrolyte layer 30b. The first interlayer 40a may include a binder and a tackifier. At times, the first structure 31 may represent a solid electrolyte layer in accordance with an embodiment.

The binder may be, for example, a polymer binder. The tackifier may be, for example, an organic compound. The tackifier may be, for example, an oligomer or a polymer. The tackifier, when mixed with a binder, may enhance the bonding strength of the binder. The tackifier may improve the surface tackiness of the binder, thereby increasing the bonding strength between the binder and the solid electrolyte particles. Additionally, the tackifier may provide tackiness.

In the first interlayer 40a, the content of the tackifier may be, for example, about 1 part to about 100 parts by weight, about 1 part to about 50 parts by weight, about 10 parts to about 40 parts by weight, or about 15 parts to about 30 parts by weight based on 100 parts by weight of the binder. By having a tackifier content in this range, the first interlayer 40a may further increase the tackiness and/or bonding strength between the first solid electrolyte layer 30a and the second solid electrolyte layer 30b. The first structure 31 including the first interlayer 40a may effectively accommodate volume changes during the charge and discharge cycles of a solid secondary battery. The increase in internal resistance of the solid electrolyte layer during the charge and discharge cycles of a solid secondary battery may be suppressed. The charge and discharge characteristics of a solid secondary battery including a solid electrolyte layer may be enhanced. If the content of the tackifier is too low, the increase in tackiness and/or bonding strength of the first interlayer 40a may be minimal. If the content of the tackifier is too high, the tackiness of the first interlayer 40a may actually decrease. The structure of the binder and the tackifier may be identified using techniques such as infrared spectroscopy (IR) and nuclear magnetic resonance (NMR), while their content may be determined using inductively coupled plasma (ICP) analysis.

In the first interlayer 40a, the loading level of the binder and the tackifier may be, for example, about 0.1 milligrams per square centimeter (mg/cm$^2$) to about 5 mg/cm$^2$, about 0.1 mg/cm$^2$ to about 3 mg/cm$^2$, about 0.1 mg/cm$^2$ to about 2 mg/cm$^2$, or about 0.3 mg/cm$^2$ to about 1 mg/cm$^2$. The loading level may refer to a content of a dried material including a binder and a tackifier disposed on the first solid electrolyte layer 30a, or disposed on the second solid electrolyte 30b, or disposed between the first solid electrolyte layer 30a and the second solid electrolyte layer 30b. By having a loading level of the first interlayer 40a within these ranges stated above, the first interlayer 40a may further increase the tackiness and/or bonding strength between the first solid electrolyte layer 30a and the second solid electrolyte layer 30b. The solid electrolyte layer including a first interlayer 40a may more effectively accommodate volume changes during the charge and discharge cycles of a solid secondary battery. The increase in internal resistance of the first structure 31 (solid electrolyte layer) during the charge and discharge cycles of a solid secondary battery may be suppressed. The charge and discharge characteristics of a solid secondary battery including the solid electrolyte layer may be enhanced. The loading level may be calculated as the weight of the dried binder and tackifier per unit area.

The first interlayer 40a may be continuously or discontinuously arranged in the direction perpendicular to the thickness of the solid electrolyte layer between the first solid electrolyte layer 30a and the second solid electrolyte layer 30b. The first interlayer 40a may be continuously arranged in a direction perpendicular to the thickness direction of the solid electrolyte layer between the first solid electrolyte layer 30a and the second solid electrolyte layer 30b, thereby more effectively increasing the bonding strength and/or tackiness between the first solid electrolyte layer 30a and the second solid electrolyte 30b.

Although not shown in the drawings, the first interlayer 40a may be discontinuously arranged in a direction perpendicular to the thickness direction of the solid electrolyte layer between the first solid electrolyte layer 30a and the second solid electrolyte layer 30b, thereby more effectively securing an ion conduction path between the first solid electrolyte layer 30a and the second solid electrolyte layer 30b.

A thickness of the interlayer may be, for example, about 0.01 micrometers to about 10 micrometers. The thickness of the first interlayer 40a may be, for example, about 0.01 micrometers ($\mu$m) to about 10 $\mu$m, about 0.1 $\mu$m to about 10 $\mu$m, about 0.1 $\mu$m to about 5 $\mu$m, about 0.1 $\mu$m to about 3 $\mu$m, or about 0.1 $\mu$m to about 1 $\mu$m. The thickness of the interlayer may be, for example, 50% or less of a thickness of the sub-solid electrolyte layer. The thickness of the first interlayer 40a may be, for example, 50 % or less, 30 % or less, 10 % or less, 5 % or less, 3 % or less, or 1 % or less of the thickness of the first solid electrolyte layer 30a. The thickness of the first interlayer 40a may be, for example, 50 % or less, 30 % or less, 10 % or less, 5 % or less, 3 % or less, or 1% or less of the thickness of the second solid electrolyte layer 30b. By having a thickness within these ranges, the first interlayer 40a may further enhance tackiness and/or bonding strength between the first solid electrolyte layer 30a and the second solid electrolyte layer 30b. The solid electrolyte layer including a first interlayer 40a may more effectively accommodate volume changes during the charge and discharge cycles of a solid secondary battery. The increase in internal resistance of the solid electrolyte layer during the charge and discharge cycles of a solid secondary battery may be suppressed. The charge and discharge characteristics of a solid secondary battery including a solid electrolyte layer may be further enhanced. The thicknesses of the first interlayer 40a, the first solid electrolyte layer 30a, and the second solid electrolyte layer 30b may be confirmed using scanning electron microscopy (SEM) or transmission electron microscopy (TEM).

The first interlayer 40a may further include, for example, a solid electrolyte. By further including a solid electrolyte in the first interlayer 40a, the first interlayer 40a may have increased ionic conductivity. By further including a solid electrolyte in the first interlayer 40a, the interfacial resistance between the first solid electrolyte layer 30a and the second solid electrolyte layer 30b may be more effectively reduced. The first interlayer 40a may further include a solid electrolyte, and the solid electrolyte may include, for example, a sulfide-based solid electrolyte, an oxide-based solid electrolyte, a halide-based solid electrolyte, an oxyhalide-based solid electrolyte, or a combination thereof. The first interlayer 40a may further include a solid electrolyte, and the solid electrolyte may be selected from the solid electrolytes used in the first solid electrolyte layer 30a and/or the second solid electrolyte layer 30b. The first interlayer 40a may further include a solid electrolyte, and the solid electrolyte may be the same solid electrolyte as the first solid electrolyte layer 30a and/or the second solid electrolyte layer 30b.

At least one or both of a plurality of the sub-solid electrolyte layers is free of the tackifier. One or both of the first solid electrolyte layer 30a and the second solid electrolyte layer 30b may be free of a tackifier. By not including a tackifier in one or both of the first solid electrolyte layer 30a and the second solid electrolyte layer 30b, an increased ion conduction pathway may be secured within the first solid electrolyte layer 30a and/or the second solid electrolyte layer 30b. The first structure 31 may include a first solid electrolyte layer 30a, a second solid electrolyte layer 30b, and a first interlayer 40a disposed between the first solid electrolyte layer and the second solid electrolyte layer. The first interlayer 40a may include a binder and a tackifier, while the first solid electrolyte layer 30a and the second solid electrolyte layer 30b may not include a tackifier, thereby enabling a further increased ion conduction path. The cycle characteristics of a solid secondary battery including such a first structure 31 may be improved.

The first solid electrolyte layer 30a may include a first surface adjacent to the first interlayer 40a and a second surface spaced from the first interlayer 40a and opposite to the first surface. The first solid electrolyte layer 30a may be free of the tackifier, for example, in a central region between the first surface and the second surface. The first solid electrolyte layer 30a may not include a tackifier, for example, in the central region between the first surface and the second surface. The central region between the first surface and the second surface may correspond to, for example, about 40 % to about 60 % of the total distance between the first surface and the second surface. By not including a tackifier in the central region between the first surface and the second surface, an enhanced ionic conduction pathway may be secured within the solid electrolyte layer. The cycle characteristics of a solid secondary battery incorporating the solid electrolyte layer may be improved.

The second solid electrolyte layer 30b may include a first surface adjacent to the first interlayer 40a and a second surface spaced from the first interlayer 40a and opposite to the first surface. The second solid electrolyte layer 30b may be free of a tackifier, for example, in a central region between the first surface and the second surface. The second solid electrolyte layer 30b may not include a tackifier, for example, in the central region between the first surface and the second surface. The central region between the first side and the second side may correspond to, for example, about 40 % to about 60 % of the total distance between the first surface and the second surface. By not including a tackifier in the central region between the first surface and the second surface, an enhanced ionic conduction pathway may be secured within the solid electrolyte layer, and the cycle characteristics of a solid secondary battery including the solid electrolyte layer may be improved.

Alternatively, one or both of the first solid electrolyte layer 30a and the second solid electrolyte layer 30b may include, for example, a tackifier. By including a tackifier in one or more of the first solid electrolyte layer 30a and the second solid electrolyte layer 30b, the tackiness and/or bonding strength of the solid electrolyte layer, including the first solid electrolyte layer 30a and the second solid electrolyte layer 30b, may be further enhanced. The first structure 31 may include a first solid electrolyte layer 30a, a second solid electrolyte layer 30b, and a first interlayer 40a disposed between the first solid electrolyte layer and the second solid electrolyte layer. The first interlayer 40a may include a binder and a tackifier. One or both of the first solid electrolyte layer 30a and the second solid electrolyte layer 30b may include a tackifier, thereby further enhancing the structural stability of the solid electrolyte layer. The solid electrolyte layer may more effectively accommodate the volume change during the charge and discharge cycles of a solid secondary battery. The increase in internal resistance of the solid electrolyte layer during the charge and discharge cycles of a solid secondary battery may be suppressed. The charge and discharge characteristics of a solid secondary battery including a solid electrolyte layer 30 may be enhanced.

One or both of the first solid electrolyte layer 30a and the second solid electrolyte layer 30b may include a tackifier. The content of the tackifier in one or both of the first solid electrolyte layer 30a and the second solid electrolyte layer 30b may be, for example, about 1 part to about 100 parts by weight, about 1 part to about 50 parts by weight, about 10 parts to about 40 parts by weight, or about 15 parts to about 30 parts by weight based on 100 parts by weight of the binder. By having a tackifier content within these ranges, the tackiness and bonding strength of the first solid electrolyte layer 30a and/or the second solid electrolyte layer 30b may be further increased. The first structure 31 including the first solid electrolyte layer 30a and the second solid electrolyte layer 30b may effectively accommodate volume changes during the charge and discharge cycles of a solid secondary battery. The increase in internal resistance of the solid electrolyte layer 30 during the charge and discharge cycles of a solid secondary battery may be suppressed. The charge and discharge characteristics of a solid secondary battery including a solid electrolyte layer may be enhanced. When the content of the tackifier is too low, the peel strength of the first solid electrolyte layer 30a and/or the second solid electrolyte layer 30b may decrease. When the content of the tackifier is too high, the tackiness of the first solid electrolyte layer 30a and the second solid electrolyte layer 30b may actually decrease. The structure of the binder and the tackifier may be identified using techniques such **IR** and NMR, while their content may be determined using ICP analysis.

The content of the tackifier of the first interlayer 40a may be higher than the content of the tackifier of the first solid electrolyte layer 30a. The content of the tackifier of the first interlayer 40a may be higher than the content of the tackifier of the second solid electrolyte layer 30b. The content of the tackifier of the first interlayer 40a may be, for example, more than 100 %, 150 % or more, 200 % or more, or 500 % or more compared to the content of the tackifier in the first solid electrolyte layer 30a. The content of the tackifier of the first interlayer 40a may be, for example, more than 100 %, 150 % or more, 200 % or more, or 500 % or more compared to the content of the tackifier of the second solid electrolyte layer 30b.

By having a higher tackifier content in the first interlayer 40a than in the first solid electrolyte layer 30a and/or the second solid electrolyte layer 30b, the structural stability of the solid electrolyte layer may be further improved. By having a higher tackifier content in the first interlayer 40a than in the first solid electrolyte layer 30a and/or the second solid electrolyte layer 30b, the increase in internal resistance of the solid electrolyte layer during the charge and discharge cycles of a solid secondary battery may be more effectively suppressed. The cycle characteristics of a solid secondary battery including the solid electrolyte layer may be improved.

The first solid electrolyte layer 30a may include a first surface adjacent to the first interlayer 40a, and a second surface which is spaced from the first interlayer 40a and opposite to the first surface. The tackifier content in the region adjacent to the first surface may be higher than that in the region adjacent to the second surface. The region adjacent to the first surface may correspond to, for example, within 10 % of the total distance between the first surface and the second surface from the first surface. The region adjacent to the second surface may correspond to, for example, within 10 % of the total distance between the first surface and the second surface from the second surface. By having a higher tackifier content in the region adjacent to the first surface of the first solid electrolyte later 30a compared to the region adjacent to the second surface, the increase in internal resistance of the solid electrolyte layer during the charge and discharge cycles of a solid secondary battery may be more effectively suppressed. The cycle characteristics of a solid secondary battery including such solid electrolyte layer may be improved.

The second solid electrolyte layer 30b may include a first surface adjacent to the first interlayer 40a, and a second surface which is spaced from the first interlayer 40a and opposite to the first surface. The tackifier content in the region adjacent to the first surface may be higher than that in the region adjacent to the second surface. The region adjacent to the first surface may correspond to, for example, within 10 % of the total distance between the first surface and the second surface from the first surface. The region adjacent to the second surface corresponds to, for example, within 10 % of the total distance between the first surface and the second surface from the second surface. By having a higher tackifier content in the region adjacent to the first surface of the second solid electrolyte layer 30b compared to the region adjacent to the second surface, the increase in internal resistance of the solid electrolyte layer during the charge and discharge cycles of a solid secondary battery may be more effectively suppressed. The cycle characteristics of a solid secondary battery including the solid electrolyte layer may be improved.

The thickness of the first solid electrolyte layer 30a and the second solid electrolyte layer 30b may each independently be about 5 $\mu$m to about 200 $\mu$m, about 10 $\mu$m to about 150 $\mu$m, about 10 $\mu$m to about 100 $\mu$m, about 30 $\mu$m to about 100 $\mu$m, or about 50 $\mu$m to about 100 $\mu$m. By having a thickness of the first solid electrolyte layer 30a and the second solid electrolyte layer 30b within these ranges, the solid electrolyte layer including the first solid electrolyte layer 30a and the second solid electrolyte layer 30b may more effectively accommodate volume changes during the charge and discharge cycles of a solid secondary battery. The increase in internal resistance of the solid electrolyte layer during the charge and discharge cycles of a solid secondary battery may be suppressed. The charge and discharge characteristics of a solid secondary battery including a solid electrolyte layer may be further enhanced. The thickness of the first solid electrolyte layer 30a and the second solid electrolyte layer 30b may be confirmed using SEM or TEM.

The first solid electrolyte layer 30a and the second solid electrolyte layer 30b may independently include solid electrolytes. The solid electrolyte may include, for example, a sulfide-based solid electrolyte, an oxide-based solid electrolyte, a halide-based solid electrolyte, an oxyhalide-based solid electrolyte, or a combination thereof.

The sulfide-based solid electrolyte may include, for example, lithium sulfide, silicon sulfide, phosphorus sulfide, boron sulfide, or a combination thereof. The sulfide-based solid electrolyte particles may include $Li_2S$, $P_2S_5$, $SiS_2$, $GeS_2$, $B_2S_3$ or a combination thereof. The sulfide-based solid electrolyte particles may be $Li_2S$ or $P_2S_5$. The sulfide-based solid electrolyte particles are known to have higher lithium ion conductivity compared to other inorganic compounds. For example, a sulfide-based solid electrolyte may include $Li_2S$ and $P_2S_5$. When the sulfide solid electrolyte material constituting the solid electrolyte includes $Li_2S$-$P_2S_5$, the mixing molar ratio of $Li_2S$ to $P_2S_5$ may range, for example, from about 50:50 to about 90:10. The sulfide-based solid electrolyte may also include an inorganic solid electrolyte prepared by adding $Li_3PO_4$, a halogen, a halogen compound, $Li_{2+2x}Zn_{1-x}GeO_4$ ("LISICON"), $Li_{3+y}PO_{4-x}N_x$ ("LIPON"), $Li_{3.25}Ge_{0.25}P_{0.75}S_4$ ("ThioLISICON"), $Li_2O$-$Al_2O_3$-$TiO_2$-$P_2O_5$ ("LATP") to $Li_2S$-$P_2S_5$, $SiS_2$, $GeS_2$, $B_2S_3$, or a combination thereof.

Non-limiting examples of the sulfide solid electrolyte material include $Li_2S$-$P_2S_5$; $Li_2S$-$P_2S_5$-LiX (X is a halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ -$P_2S_5$-$Z_mS_n$ (m and n are positive numbers, and Z is Ge, Zn, or G); $Li_2S$-$GeS_2$; $Li_2S$-$SiS_2$-$Li_3PO_4$; and $Li_2S$-$SiS_2$-$Li_pMO_q$ (wherein p and q are positive numbers, and M is P, Si, Ge, B, Al, Ga or In). In this regard, the sulfide-based solid electrolyte material may be prepared by processing the starting raw materials of sulfide-based solid electrolytes (e.g., $Li_2S$, $P_2S_5$, etc.) through methods such as melt quenching, or mechanical milling. Additionally, a calcination process may be performed after the above processing.

The sulfide-based solid electrolyte may include, for example, an Argyrodite type solid electrolyte represented by Formula A:

$$\text{Formula A} \qquad Li^{+1}_{2-n-x}A^{n+}X^{2-}_{6-x}Y^-_x$$

where A is P, As, Ge, Ga, Sb, Si, Sn, Al, In, Ti, V, Nb or Ta; X is S, Se or Te; Y is Cl, Br, I, F, CN, OCN, SCN or $N_3$; and $1 \leq n \leq 5$, and $0 \leq x \leq 2$. The sulfide-based solid electrolyte may be, for example, an Argyrodite-type compound including at least one or more of $Li_{7-x}PS_{6-x}Cl_x$, $0 \leq x \leq 2$, $Li_{7-x}PS_{6-x}Br_x$, $0 \leq x \leq 2$, or $Li_{7-x}PS_{6-x}I_x$, $0 \leq x \leq 2$. The sulfide-based solid electrolyte may be, for example, an Argyrodite-type compound including at least one or more of $Li_6PS_5Cl$, $Li_6PS_5Br$, or $Li_5PS_5I$.

The oxide-based solid electrolyte may include, for example, a garnet-type solid electrolyte, a nasicon-type solid electrolyte, a LISICON-type solid electrolyte, a perovskite-type solid electrolyte, a LiPON-type solid electrolyte, an amorphous (glass) solid electrolyte, or a metal oxide. The solid electrolyte may be fabricated using methods such as sintering.

Garnet-type solid electrolytes may include lithium lanthanum zirconium oxide (LLZO), represented by $Li_{3+x}La_yM_zO_{12}$ ($1 \leq x \leq 10$, $2 \leq y \leq 4$, $1 \leq z \leq 3$, where M is Zr, Ga, W, Nb, Ta, Al, or a combination thereof). Examples may include $Li_7La_3Zr_2O_{12}$ and $Li_{3+x}La_3Zr_{2-a}M_aO_{12}$ (M-doped LLZO, where M = Ga, W, Nb, Ta, Al, or a combination thereof, $1 \leq x \leq 10$, $0 < a < 2$).

Nasicon-type solid electrolytes may include $Li_{1+x}Al_xM_{2-x}(PO_4)_3$ ($0 < x < 2$, where M = Zr, Ti, Ge, or a combination thereof, LAMP-type), $Li_{1+x}Al_xTi_{2-x}(PO_4)_3$ ($0 < x < 1$) (Lithium-Aluminum-Titanium-Phosphate (LATP) with Ti doping), $Li_{1.3}Al_{0.3}M_{1.7}(PO_4)_3$ (excess lithium-doped LATP), $Li_{1+x}Al_xGe_{2-x}(PO_4)_3$ ($0 < x < 1$) (Lithium-Aluminum-Germanium-Phosphate (LAGP)), or $LiZr_2(PO_4)_3$ (Lithium-Zirconium-Phosphate (LZP)).

LISCON-type solid electrolytes may be represented by $xLi_3AO_4$-$(1-x)Li_4BO_4$ (where A is P, As, or V, and B is Si, Ge, or Ti), and may include solid solution oxides including $Li_{14}Zn(GeO_4)_4$, $Li_{10}GeP_2O_{12}$ (LGPO), $Li_{3.5}Si_{0.5}P_{0.5}O_4$, and $Li_{10.42}Si(Ge)_{1.5}P_{1.5}Cl_{0.08}O_{11.92}$.

Perovskite-type solid electrolytes may include lithium lanthanum titanate (LLTO), represented by $Li_{3x}La_{2/3-x}\square_{1/3-2x}TiO_3$ ($0 < x < 0.16$) where $\square$ denotes A-site vacancies. An example of a perovskite-type solid electrolyte is $Li_{1/8}La_{5/8}TiO_3$.

LiPON-type solid electrolytes may include lithium phosphorus oxynitride (LiPON), such as $Li_{2.8}PO_{3.3}N_{0.46}$.

Amorphous (glass) solid electrolytes may include $Li_2O$-$B_2O_3$-$SiO_2$, $Li_2O$-$B_2O_3$-$P_2O_5$, $Li_3BO_3$-$Li_2SO_4$, or $Li_3BO_3$-$Li_2CO_3$.

Metal oxide solid electrolytes may include: $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_2O$, $LiOH$, $Li_2CO_3$, $LiAlO_2$.

Oxide-based solid electrolytes may include $Li_{1+x+y}Al_xTi_{2-x}Si_yP_{3-y}O_{12}$ ($0 < x < 2$, $0 \leq y < 3$), $BaTiO_3$, $Pb(Zr,Ti)O_3$

(PZT), $Pb_{1-x}La_xZr_{1-y}Ti_yO_3$ (PLZT) ($0 \leq x < 1$, $0 \leq y < 1$), $Pb(Mg_3Nb_{2/3})O_3$-$PbTiO_3$ (PMN-PT), $Li_xTi_y(PO_4)_3$ ($0 < x < 2$, $0 < y < 3$), $Li_xAl_yTi_z(PO_4)_3$ ($0 < x < 2$, $0 < y < 1$, $0 < z < 3$), $Li_{1+x+y}(Al, Ga)x(Ti, Ge)_{2-x}SiyP_{3-y}O_{12}$ ($0 \leq x \leq 1$, $0 \leq y \leq 1$), $Li_xLa_yTiO_3$ ($0 < x < 2$, $0 < y < 3$), $Li_2O$-$Al_2O_3$-$SiO_2$-$P_2O_5$-$TiO_2$-$GeO_2$, $Li_{3+x}La_3M_2O_{12}$ (M = Te, Nb, or Zr, x = integer from 1 to 10).

The solid electrolyte layer may be, for example, a self-standing film. A self-standing film refers to a membrane that may maintain its shape without a support. The self-standing film may be, for example, separated from the support and applied to lamination processes for electrode manufacturing or the fabrication of a solid secondary battery. Additionally, the self-standing film may facilitate the implementation of various manufacturing processes for electrodes and/or all solid secondary batteries.

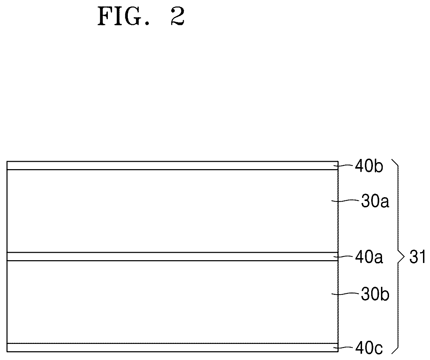

FIG. 2 is a cross-sectional schematic view of a solid electrolyte layer including a first structure 31 according to another embodiment.

Referring to FIG. 2, the solid electrolyte layer may include a first structure 31. The first structure 31 may include a first interlayer 40a, a first solid electrolyte layer 30a, and a second solid electrolyte layer 30b, and the first structure 31 may include a top surface and a bottom surface opposite to the top surface. The first structure 31 may further include, for example, a second interlayer 40b disposed on the top surface and/or a third interlayer 40c disposed on the bottom surface. The first interlayer 40a, the second interlayer 40b, and the third interlayer 40c may independently include a binder and a tackifier. Although not shown in the drawings, the second interlayer 40b or the third interlayer 40c may be omitted. By further including a second interlayer 40b and/or a third interlayer 40c in the solid electrolyte layer, the tackiness and/or bonding strength between the solid electrolyte layer and the cathode and/or between the solid electrolyte layer and the anode may be improved. By incorporating such a solid electrolyte layer in a solid secondary battery, the increase in internal resistance during the charge and discharge cycles may be more effectively suppressed. The cycle characteristics of a solid secondary battery including the solid electrolyte layer may be improved.

Referring to FIGS. 1 and 2, the first interlayer 40a, the second interlayer 40b, and the third interlayer 40c include a binder and a tackifier. The first solid electrolyte layer 30a and the second solid electrolyte layer 30b may optionally include a binder and a tackifier.

Second structure

A solid electrolyte layer according to an embodiment may include a second structure. The second structure may include a third solid electrolyte layer and a fourth solid electrolyte layer. One or more of the third solid electrolyte layer and the fourth solid electrolyte layer may include a binder and a tackifier.

By including a binder and a tackifier in one or more of the third solid electrolyte layer and the fourth solid electrolyte layer of the second structure, the bonding strength between the solid electrolyte particles constituting the one or more of the solid electrolyte layers may be improved. In addition, in a solid secondary battery employing a solid electrolyte layer including a second structure, the bonding strength between the solid electrolyte layer and the cathode, and/or the solid electrolyte layer and the anode, may be improved. By including a binder and a tackifier in one or more of the third solid electrolyte layer and the fourth solid electrolyte layer, tackiness may be imparted between the particles constituting the solid electrolyte layer. By bringing the solid electrolyte particles in the solid electrolyte layer into close contact, the voids between the particles may be reduced. The interfacial resistance between solid electrolyte particles constituting the solid electrolyte layer may be reduced. The internal resistance of a solid electrolyte layer including the second structure may be reduced. By possessing enhanced bonding strength in one or more of the third solid electrolyte layer and the fourth solid electrolyte layer, the viscoelasticity and/or restoring force of the solid electrolyte layer including them may be improved. By providing enhanced bonding strength and/or tackiness in one or both of the third solid electrolyte layer and the fourth solid electrolyte layer, the formation of voids, cracks, or electrical disconnections in the layers may be effectively suppressed during the charge and discharge cycles of a solid secondary battery. By providing enhanced bonding strength and/or tackiness in one or more of the third solid electrolyte layer and the fourth solid electrolyte layer, the volume changes of the solid secondary battery during the charge and discharge cycles may be more effectively suppressed. By having enhanced tackiness and/or bonding strength in one or both of the third solid electrolyte layer and the fourth solid electrolyte layer, degradation due to volume changes in the solid secondary battery during the charge and discharge cycles may be more effectively mitigated. By having enhanced tackiness and/or bonding strength in one or both of the third solid electrolyte layer and the fourth solid electrolyte layer, increases in interfacial resistance and/or internal resistance of the solid electrolyte layer during the charge and discharge cycles may be suppressed. As a result, the charge and discharge characteristics of the solid secondary battery may be enhanced.

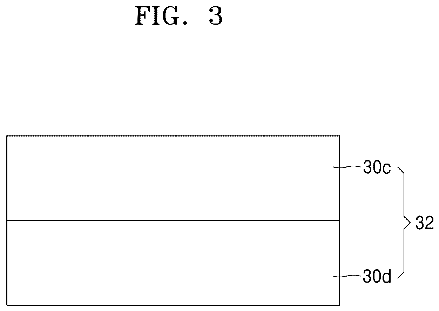

FIG. 3 is a cross-sectional schematic view of a solid electrolyte layer including a second structure according to an embodiment.

Referring to FIG. 3, the solid electrolyte layer may include a second structure 32. The second structure 32 may include a third solid electrolyte layer 30c and a fourth solid electrolyte layer 30d. One or more of the third solid electrolyte layer 30c and the fourth solid electrolyte layer 30d may include a binder and a tackifier.

The content of the tackifier in the third solid electrolyte layer 30c and the fourth solid electrolyte layer 30d may independently be, for example, about 1 part to about 100 parts by weight, about 1 part to about 50 parts by weight, about 10 parts to about 40 parts by weight, or about 15 parts to about 30 parts by weight based on 100 parts by weight of the binder. By having a tackifier content in this range, the tackiness and/or bonding strength of the third solid electrolyte layer 30c and the fourth solid electrolyte layer 30d may be further increased. The solid electrolyte layer including a third solid electrolyte layer 30c and a fourth solid electrolyte layer 30d may effectively accommodate volume changes during the charge and discharge cycles of a solid secondary battery. The increase in internal resistance of the solid electrolyte layer during the charge and discharge cycles of a solid secondary battery may be suppressed. The charge and discharge characteristics of a solid secondary battery including a solid electrolyte layer may be enhanced. If the content of the tackifier is too low, the peel strength of the third solid electrolyte layer 30c and the fourth solid electrolyte layer 30d may be reduced. If the content of the tackifier is too high, the tackiness of the third solid electrolyte layer 30c and the fourth solid electrolyte layer 30d may actually decrease. The structure of the binder and the tackifier may be identified using techniques such IR and NMR, while their content may be determined using ICP analysis.

The thickness of the third solid electrolyte layer 30c and the fourth solid electrolyte layer 30d may each independently be about 5 $\mu$m to about 200 $\mu$m, about 10 $\mu$m to about 150 $\mu$m, about 10 $\mu$m to about 100 $\mu$m, about 30 $\mu$m to about 100 $\mu$m, or about 50 $\mu$m to about 100 $\mu$m. By having a thickness of the third solid electrolyte layer 30c and the fourth solid electrolyte layer 30d within these ranges, the solid electrolyte layer including the third solid electrolyte layer 30c and the fourth solid electrolyte layer 30d may more effectively accommodate volume changes during the charge and discharge cycles of a solid secondary battery. The increase in internal resistance of the solid electrolyte layer during the charge and discharge cycles of a solid secondary battery may be suppressed. The charge and discharge characteristics of a solid secondary battery including a solid electrolyte layer may be further enhanced. The thickness of the third solid electrolyte layer 30c and the fourth solid electrolyte layer 30d may be confirmed using SEM or TEM.

The third solid electrolyte layer 30c and the fourth solid electrolyte layer 30d may include a solid electrolyte. The solid electrolyte may include, for example, a sulfide-based solid electrolyte, an oxide-based solid electrolyte, a halide-based solid electrolyte, an oxyhalide-based solid electrolyte, or a combination thereof. The solid electrolyte may be selected from the solid electrolytes used in the first structure 31 described above.

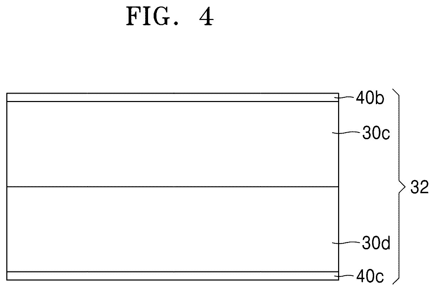

FIG. 4 is a cross-sectional schematic view of a solid electrolyte layer including a second structure 32 according to another embodiment.

Referring to FIG. 4, the solid electrolyte layer may include a second structure 32. The second structure 32 may include a third solid electrolyte layer 30c and a fourth solid electrolyte layer 30d, and the second structure 32 may include a top surface and a bottom surface opposite to the top surface. The second structure 32 may further include, for example, a second interlayer 40b disposed on the top surface and/or a third interlayer 40c disposed on the bottom surface. The second interlayer 40b and the third interlayer 40c independently may include a binder and a tackifier. Although not shown in the drawings, the second interlayer 40b or the third interlayer 40c may be omitted. By further including a second interlayer 40b and/or a third interlayer 40c in the solid electrolyte layer including the second structure 32, the tackiness and/or bonding strength between the solid electrolyte layer and the cathode and/or between the solid electrolyte layer and the anode may be improved. By incorporating such a solid electrolyte layer in a solid secondary battery, the increase in internal resistance during the charge and discharge cycles may be more effectively suppressed. The cycle characteristics of a solid secondary battery including the solid electrolyte layer may be improved.

Referring to FIGS. 3 and 4, one or both of the third solid electrolyte layer 30c and the fourth solid electrolyte layer 30d may include a binder and a tackifier. The binder and the tackifier included in the third solid electrolyte layer 30c and the fourth solid electrolyte layer 30d may be selected from the binder and the tackifier used in the first structure 31 described above.

Third structure

A solid electrolyte layer according to an embodiment may include a third structure. The third structure may include a fifth solid electrolyte layer. The fifth solid electrolyte layer may include a binder and a tackifier.

By incorporating a binder and a tackifier in the fifth solid electrolyte layer of the third structure, the bonding strength between the solid electrolyte particles constituting the fifth solid electrolyte layer may be improved. In addition, in a solid battery employing a solid electrolyte layer including a third structure, the bonding strength between the solid electrolyte layer and the cathode, and/or the solid electrolyte layer and the anode, may be improved. By including a binder and a tackifier in the fifth solid electrolyte layer, tackiness may be imparted between the particles constituting the solid electrolyte layer. By bringing the solid electrolyte particles in the fifth solid electrolyte layer into close contact, the voids between the particles may be reduced. The interfacial resistance between solid electrolyte particles constituting the solid electrolyte layer may be reduced. The internal resistance of a solid electrolyte layer including a third structure may be reduced. By possessing enhanced bonding strength in the fifth solid electrolyte layer, the viscoelasticity and/or restoring force of the solid electrolyte layer including them may be improved. By providing improved bonding strength and/or tackiness of the fifth solid electrolyte layer, occurrence of voids, cracks, or electrical disconnection in the fifth solid electrolyte layer during the charge and discharge cycles of the solid secondary battery may be suppressed. By providing enhanced bonding strength and/or tackiness in the fifth solid electrolyte layer, the volume changes of the solid secondary battery during the charge and discharge cycles may be more effectively suppressed. By having enhanced bonding strength and/or tackiness in the fifth solid electrolyte layer, degradation due to volume changes in the solid secondary battery during the charge and discharge cycles may be more effectively mitigated. By having enhanced bonding strength and/or tackiness in the fifth solid electrolyte layer, increases in interfacial resistance and/or internal resistance of the solid electrolyte layer during the charge and discharge cycles may be suppressed. As a result, the charge and discharge characteristics of a solid secondary battery may be enhanced.

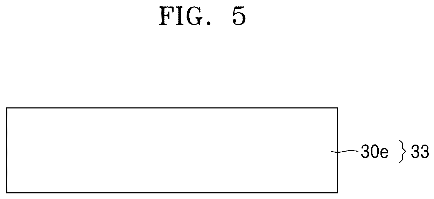

FIG. 5 is a cross-sectional schematic view of a solid electrolyte layer including a third structure 33 according to an embodiment.

Referring to FIG. 5, the solid electrolyte layer may include a third structure 33. The third structure 33 may include a fifth solid electrolyte layer 30e. The fifth solid electrolyte layer 30e may include a binder and a tackifier.

In the fifth solid electrolyte layer 30e, the content of the tackifier may be, independently, for example, about 1 part to about 100 parts by weight, about 1 part to about 50 parts by weight, about 10 parts to about 40 parts by weight, or about 15 parts to about 30 parts by weight based on 100 parts by weight of the binder. By having a tackifier content in this range, the tackiness and/or bonding strength of the fifth solid electrolyte layer 30e may be further increased. The solid electrolyte layer including a fifth solid electrolyte layer 30e may effectively accommodate volume changes during the charge and discharge cycles of a solid secondary battery. The increase in internal resistance of the solid electrolyte layer during charge and discharge cycles of a solid secondary battery may be suppressed. The charge and discharge characteristics may be enhanced. If the content of the tackifier is too low, the peel strength of the fifth solid electrolyte layer (30e) may be reduced. If the content of the tackifier is too high, the tackiness of the fifth solid electrolyte layer 30e may actually decrease. The structure of the binder and the tackifier may be identified using techniques such IR and NMR, while their content may be determined using ICP analysis.

The thickness of the fifth solid electrolyte layer 30e may independently be about 5 $\mu$m to about 200 $\mu$m, about 10 $\mu$m to about 150 $\mu$m, about 10 $\mu$m to about 100 $\mu$m, about 30 $\mu$m to about 100 $\mu$m, or about 50 $\mu$m to about 100 $\mu$m. By having a thickness of the fifth solid electrolyte layer 30e within these ranges, the solid electrolyte layer including the fifth solid electrolyte layer 30e may more effectively accommodate volume changes during the charge and discharge cycles of a solid secondary battery. The increase in internal resistance of the solid electrolyte layer during charge and discharge cycles of a solid secondary battery may be suppressed. The charge and discharge characteristics of a solid secondary battery including a solid electrolyte layer may be further enhanced. The thickness of the fifth solid electrolyte layer 30e may be confirmed using SEM or TEM.

The fifth solid electrolyte layer 30e may include a solid electrolyte. The solid electrolyte may include, for example, a sulfide-based solid electrolyte, an oxide-based solid electrolyte, a halide-based solid electrolyte, an oxyhalide-based solid electrolyte, or a combination thereof. The solid electrolyte may be selected from the solid electrolytes used in the first structure 31 described above.

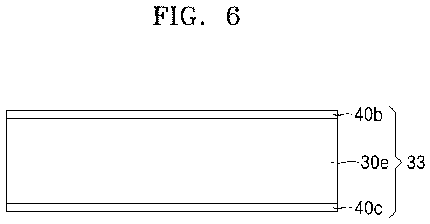

FIG. 6 is a cross-sectional schematic view of a solid electrolyte layer including a third structure 33 according to another embodiment.

Referring to Fig. 6, the solid electrolyte layer may include a third structure 33. The third structure 33 may include a fifth solid electrolyte layer 30e, and the third structure 33 includes a top surface and a bottom surface opposite to the top surface. The third structure 33 may further include, for example, a second interlayer 40b disposed on the top surface and/or a third interlayer 40c disposed on the bottom surface. The second interlayer 40b and the third interlayer 40c may each independently include a binder and a tackifier. Although not shown in the drawings, the second interlayer 40b or the third interlayer 40c may be omitted. By further including a second interlayer 40b and/or a third interlayer 40c in the solid electrolyte layer including the third structure 33, the tackiness and/or bonding strength between the solid electrolyte layer and the cathode and/or between the solid electrolyte layer and the anode may be improved. By incorporating such a solid electrolyte layer in a solid secondary battery, the increase in internal resistance during charge and discharge cycles may be more effectively suppressed. The cycle characteristics of a solid secondary battery including the solid electrolyte layer may be improved.

Referring to FIGS. 5 and 6, the fifth solid electrolyte layer 30e may include a binder and a tackifier. The binder and tackifier included in the fifth solid electrolyte layer 30e may be selected from the binders and tackifiers used in the first structure 31 described above.

Solid Battery

By including a solid electrolyte layer in a solid battery, the internal resistance of the solid battery may be reduced and the charge and discharge characteristics of the solid battery may be enhanced.

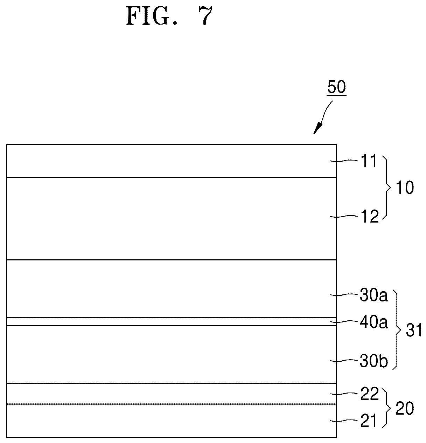

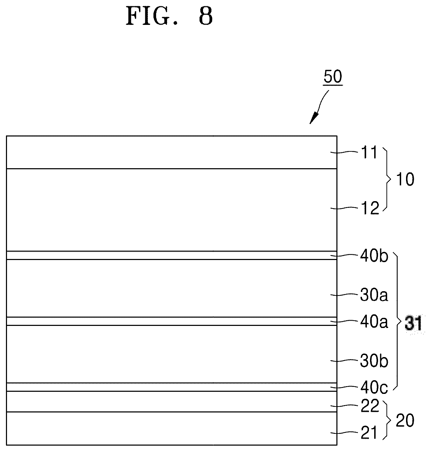

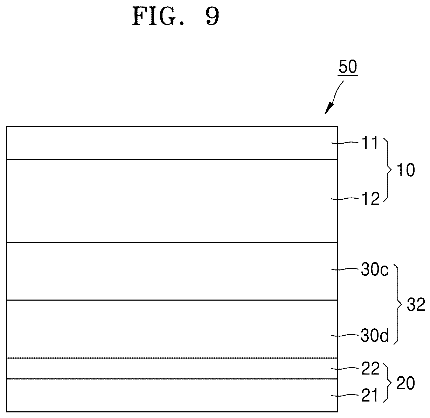

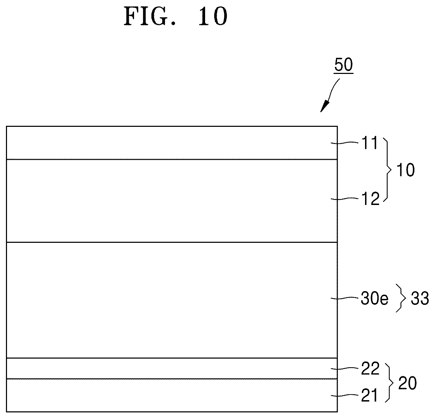

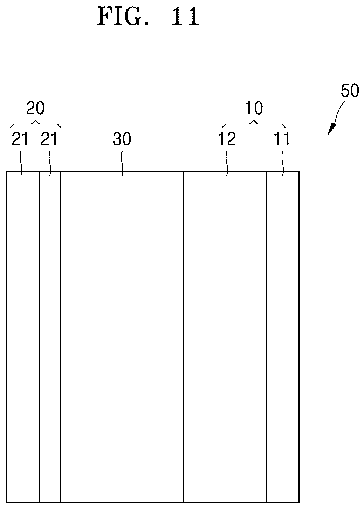

FIGS. 7 to 12 are schematic view solid batteries according to an embodiment. The solid battery 50 may include, for example, a cathode layer 10 including a cathode active material layer 12 arranged on a cathode current collector 11; an anode layer 20 including an anode active material layer 22 arranged on an anode current collector 21; and a solid electrolyte layer arranged between the cathode layer 10 and the anode layer 20.

The solid battery may be prepared as follows.

First, the cathode 10 is prepared. The cathode 10 may be prepared by forming a cathode active material layer 12 containing a cathode active material on a cathode current collector 11.

The cathode active material layer 12 may be prepared using either a vapor-phase method or a solid-phase method or a liquid-phase method. The vapor deposition method may be, but is not limited to, pulsed laser deposition (PLD), sputtering deposition, chemical vapor deposition (CVD), or any other applicable method in the relevant technical field. The solid-phase method may be, but is not limited to, a sintering method, a powder pressing method, or any other applicable method in the relevant technical field. The liquid-phase method may be, but is not limited to, a sol-gel method, a doctor blade method, a screen-printing method, a slurry casting method, or any other applicable method in the relevant technical field.

The cathode active material layer 12 may be prepared, for example, as follows. A cathode active material composition may be prepared by mixing a cathode active material, a conductive agent, a binder, and a solvent. The cathode active material composition may be directly coated and dried on the cathode current collector 11 to form the cathode 10. Alternatively, the cathode active material composition may be cast onto a separate substrate to form a film, which may be then peeled off and laminated onto the cathode current collector 11 to manufacture the cathode 10. Alternatively, the cathode active material composition may be prepared in the form of an electrode ink containing an excessive amount of solvent and printed on the cathode current collector 11 using an inkjet method or a gravure printing method to manufacture the cathode 10. The printing method is not limited to the above method, and any general coating or printing method applicable to the field may be used.

The cathode active material layer 12 may include a cathode active material.

The cathode active material may be any material commonly used in lithium batteries without limitation. The cathode active material may be, for example, a lithium transition metal oxide, a transition metal sulfide, etc. The lithium transition metal oxide may be, for example, one or more composite oxides of lithium and a metal selected from cobalt, manganese, nickel, and a combination thereof. The cathode active material may include, for example, compounds expressed by the following chemical formulas: $Li_aA_{1-b}B'_bD_2$ (where $0.90 \leq a \leq 1$, and $0 \leq b \leq 0.5$); $Li_aE_{1-b}B'_bO_{2-c}D_c$ (where $0.90 \leq a \leq 1$, $0 \leq b \leq 0.5$, $0 \leq c \leq 0.05$); $LiE_{2-b}B'_bO_{4-c}D_c$ (where $0 \leq b \leq 0.5$, $0 \leq c \leq 0.05$); $Li_aNi_{1-b-c}Co_bB'_cD_\alpha$ (where $0.90 \leq a \leq 1$, $0 \leq b \leq 0.5$, $0 \leq c \leq 0.05$, $0 < \alpha \leq 2$); $Li_aNi_{1-b-c}CO_bB'_cO_{2-\alpha}F'_\alpha$ (where $0.90 \leq a \leq 1$, $0 \leq b \leq 0.5$, $0 \leq c \leq 0.05$, $0 < \alpha < 2$); $Li_aNi_{1-b-c}Mn_bB'_cD_\alpha$ (where $0.90 \leq a \leq 1$, $0 \leq b \leq 0.5$, $0 \leq c \leq 0.05$, $0 < \alpha \leq 2$); $Li_aNi_{1-b-c}Mn_bB'_cO_{2-\alpha'}F'_\alpha$ (where $0.90 \leq a \leq 1$, $0 \leq b \leq 0.5$, $0 \leq c \leq 0.05$, $0 < \alpha < 2$); $Li_aNi_bE_cG_dO_2$ (where $0.90 \leq a \leq 1$, $0 \leq b \leq 0.9$, $0 \leq c \leq 0.5$, $0.001 \leq d \leq 0.1$); $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, $0.001 \leq e \leq 0.1$); $Li_aNiG_bO_2$ (where $0.90 \leq a \leq 1$, $0.001 \leq b \leq 0.1$); $Li_aCoG_bO_2$ (where $0.90 \leq a \leq 1$, $0.001 \leq b \leq 0.1$); $Li_aMnG_bO_2$ (where $0.90 \leq a \leq 1$, $0.001 \leq b \leq 0.1$); $Li_aMn_2G_bO_4$ (where $0.90 \leq a \leq 1$, $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq 2$); and $LiFePO_4$. In the Formula, A is Ni, Co, Mn, or a combination thereof; B' is Al, Ni, Co, Mn, Cr, Fe, Mg, Sr, V, a rare earth element, or a combination thereof; D is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof. The cathode active material may include, for example, $LiCoO_2$, $LiMnxO_2x$ (x = 1, 2), $LiNi_{1x}Mn_xO_{2x}$ ($0 < x < 1$), $Ni_{1-x-y}Co_xMn_yO_2$ ($0 \leq x \leq 0.5$, $0 \leq y \leq 0.5$), $LiFePO_4$, $TiS_2$, $FeS_2$, $TiS_3$, and $FeS_30$.

The cathode active material may include, for example, a lithium transition metal oxide represented by Formulae 1 to 8:

Formula 1       $Li_aNi_xCo_yM_zO_{2-b}A_b$

wherein in Formula 1,

$1.0 \leq a \leq 1.2$, $0 \leq b \leq 0.2$, $0.8 \leq x < 1$, $0 \leq y \leq 0.3$, $0 < z \leq 0.3$, and $x + y + z = 1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof,
A is F, S, Cl, Br or a combination thereof,

Formula 2       $LiNi_xCo_yMn_zO_2$

Formula 3       $LiNi_xCo_yAl_zO_2$

In Formulae 2 to 3, $0.8 \leq x \leq 0.95$, $0 \leq y \leq 0.2$, $0 < z \leq 0.2$, and $x + y + z = 1$

Formula 4 $\quad\quad$ $LiNi_xCo_yMn_zAl_wO_2$

In Formula 4, $0.8 \leq x \leq 0.95$, $0 \leq y \leq 0.2$, $0 < z \leq 0.2$, $0 < w \leq 0.2$, and $x + y + z + w = 1$

Formula 5 $\quad\quad$ $Li_aCo_xM_yO_{2-b}A_b$

In Formula 5, $1.0 \leq a \leq 1.2$, $0 \leq b \leq 0.2$, $0.9 \leq x \leq 1$, $0 \leq y \leq 0.1$, and $x + y = 1$,

M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof,
A is F, S, Cl, Br or a combination thereof,

Formula 6 $\quad\quad$ $Li_aNi_xMn_yM'_zO_{2-b}A_b$

In Formula 6,

$1.0 \leq a \leq 1.2$, $0 \leq b \leq 0.2$, $0 < x \leq 0.3$, $0.5 \leq y < 1$, $0 < z \leq 0.3$, and $x + y + z = 1$,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof,
A is F, S, Cl, Br or a combination thereof,

Formula 7 $\quad\quad$ $Li_aM1_xM2_yPO_{4-b}X_b$

In Formula 7, $0.90 \leq a \leq 1.1$, $0 \leq x \leq 0.9$, $0 \leq y \leq 0.5$, $0.9 < x + y < 1.1$, $0 \leq b \leq 2$,

M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and
X is O, F, S, P, or a combination thereof.

Formula 8 $\quad\quad$ $Li_aM3_zPO_4$

In Formula 8, $0.90 \leq a \leq 1.1$, $0.9 \leq z \leq 1.1$, and
M3 is chromium (Cr), manganese (Mn), iron (Fe), cobalt (Co), nickel (Ni), copper (Cu), zirconium (Zr), or a combination thereof.

The cathode active material may be covered by a coating layer. The coating layer may be any layer known as a coating layer for the cathode active material of a multilayer ceramic battery. The coating layer may be, for example, $Li_2O$-$ZrO_2$ (LZO).

The particle size of the cathode active material may range, for example, from about 0.1 $\mu$m to about 20 $\mu$m, about 0.5 $\mu$m to about 10 $\mu$m, or about 1 $\mu$m to about 5 $\mu$m. The cathode active material may be, for example, a single crystal particle or a polycrystalline particle.

The shape of the cathode active material may be, for example, a true sphere, an elliptical sphere, or other particle-like shapes. The particle size of the cathode active material is not particularly limited and falls within a range applicable to cathode active materials of conventional all solid batteries. The content of the cathode active material of the cathode active material layer 12 is not particularly limited and falls within a range generally applied to the cathode active material layer 12 of a solid battery. The content of the cathode active material included in the cathode active material layer 12 may be about 80 wt% to about 99 wt%, about 80 wt% to about 95 wt%, or about 80 wt% to about 90 wt% of the total weight of the cathode active material layer 12.

The cathode active material layer 12 may further include a slid electrolyte. The solid electrolyte may be selected from the solid electrolytes used in the solid electrolyte layer 30. The solid electrolyte may include, for example, an oxide-based solid electrolyte, a sulfide-based solid electrolyte, an oxyhalide-based solid electrolyte, or a combination thereof. The solid electrolyte content in the cathode active material layer 12 may be about 0.1 wt% to about 20 wt%, about 1wt% to about 20 wt%, or about 10 wt% to about 20 wt% of the total weight of the cathode active material layer 12.

The cathode active material layer 12 may further include a conductive material, a binder, or a combination thereof.

The conductive material may include, for example, a carbon-based conductive material. The carbon-based conductive materials may include, for example, carbon black, carbon fibers, graphite, fluorocarbon, or a combination thereof. The carbon black may include, for example, acetylene black, Ketjen black, Super P carbon, channel black, furnace black, lamp black, thermal black or a combination thereof. The graphite may be natural or artificial graphite. The cathode active material layer 12 may further include a metal-based conductive agent, a metal oxide-based conductive agent, or a polymer-based conductive agent in addition to the carbon-based conductive agent described above. The metal conductive material may include, for example, a metal fiber; a metal powder such as aluminum powder or nickel powder; a conductive metal oxide such as zinc oxide or potassium titanate; or a polyethylene derivative. The content of the conductive agent may be about 1 part to about 10 parts by weight, or about 2 parts to about 7 parts by weight, based on 100 parts by weight of the cathode active material.

The binder may improve the adhesion between components of the cathode active material layer 12, and the adhesion of the cathode active material layer 12 to the cathode current collector 11. The binder may include, for example, polyacrylic acid (PAA), polyvinylidene fluoride (PVDF), polyvinyl alcohol (PVA), carboxymethyl cellulose (CMC), starch, hydroxypropyl cellulose, regenerated cellulose, polyvinylpyrrolidone (PVP), tetrafluoroethylene, polyethylene (PE), polypropylene (PP), ethylene-propylene-diene monomer (EPDM), sulfonated EPDM, styrene-butadiene rubber (SBR), fluorinated rubber, their copolymers, or a combination thereof. The content of the binder may be about 1 part to about 10 parts by weight, or about 2 parts to about 7 parts by weight, based on 100 parts by weight of the cathode active material. The binder may be omitted.

The cathode current collector 11 may include, for example, a metal-based substrate or a carbon-based substrate. The metal-based substrate may include stainless steel, nickel (Ni), aluminum (Al), indium (In), copper (Cu), magnesium (Mg), titanium (Ti), iron (Fe), cobalt (Co), nickel (Ni), zinc (Zn), germanium (Ge), lithium (Li), or their alloys in the form of a porous body, mesh, plate, or foil. The carbon-based substrate may include, for example, one-dimensional carbon-based materials such as carbon fibers or carbon tubes; two-dimensional carbon-based materials such as graphite or graphene; or a combination thereof. The cathode current collector 12 may further include a binder. The binder may be selected from the binders used in the cathode active material layer 12. The cathode current collector 11 may be omitted.

Next, the solid electrolyte layer is prepared.

Referring to FIGS. 7 to 10, a solid electrolyte layer including a first structure 31, a solid electrolyte layer including a second structure 32, or a solid electrolyte layer including a third structure 33 is prepared.

Next, the anode 20 is prepared.

Referring to FIGS. 7 to 12, the anode 20 may include an anode current collector 21 and an anode active material layer 22 disposed on the anode current collector 21, and the anode active material layer 22 may include, for example, an anode active material and a binder.

The anode active material included in the anode active material layer 22 is, for example, in a particulate form. The average particle size of the anode active material may be, for example, 4 $\mu$m or less, 3 $\mu$m or less, 2 $\mu$m or less, 1 $\mu$m or less, or 900 nanometers (nm) or less. The average particle size may also range, for example, from about 10 nm to about 4 $\mu$m or less, about 10 nm to about 3 $\mu$m or less, about 10 nm to about 2 $\mu$m or less, about 10 nm to about 1 $\mu$m or less, or about 10 nm to about 900 nm or less. By having an average particle size of the anode active material within these ranges, the reversible absorption and/or desorption of lithium during the charge and discharge cycles may be facilitated. The average particle size of the anode active material is measured, for example, as the median diameter (D50) using a laser particle size analyzer.

The anode active material included in the anode active material layer 22 includes, for example, one or more selected from a carbon-based anode active material and a metal or metalloid anode active material.

The carbon-based anode material is particularly amorphous carbon. Examples of amorphous carbon include carbon black (CB), acetylene black (AB), furnace black (FB), ketjen black (KB), and graphene. However, it is not limited to these, and any material classified as amorphous carbon in the relevant technical field may be used. Amorphous carbon refers to carbon materials without crystallinity or with very low crystallinity, distinguishing it from crystalline carbon or graphitic carbon.

The metal or metalloid anode active material may include at least one or more of gold (Au), platinum (Pt), palladium (Pd), silicon (Si), silver (Ag), aluminum (Al), bismuth (Bi), tin (Sn), or zinc (Zn), but is not necessarily limited thereto, and any metal or metalloid anode active material that forms an alloy or compound with lithium in the relevant technical field may be used. For example, nickel (Ni) does not form an alloy with lithium and is therefore not a metal anode active material.

The anode active material layer 22 may include a single type of anode active material or a mixture of multiple different anode active materials. For example, the anode active material layer 22 may include only amorphous carbon or at least one or more of gold (Au), platinum (Pt), palladium (Pd), silicon (Si), silver (Ag), aluminum (Al), bismuth (Bi), tin (Sn), or zinc (Zn). Alternatively, the anode active material layer 22 may include a combination of amorphous carbon and at least one or more of gold (Au), platinum (Pt), palladium (Pd), silicon (Si), silver (Ag), aluminum (Al), bismuth (Bi), tin (Sn), or zinc (Zn). The mixing ratio of amorphous carbon to metal in the mixture (by weight) may be, for example, about 10:1 to about 1:2, about 5:1 to about 1:1, or about 4:1 to about 2:1, but it is not necessarily limited to these ranges. The ratio may be selected based on the desired performance characteristics of the solid battery. By configuring the anode active material with this composition, the cycle performance of the all solid battery may be further improved.

The anode active material layer 22 may include a combination of first particles composed of amorphous carbon and second particles composed of metal or metalloid. The metal or metalloid materials may include, for example, gold (Au), platinum (Pt), palladium (Pd), silicon (Si), silver (Ag), aluminum (Al), bismuth (Bi), tin (Sn), and zinc (Zn). Metalloids may alternatively be semiconductors. The content of the second particles is about 8 wt% to about 60 wt%, about 10 wt% to about 50 wt%, about 15 wt% to about 40 wt%, or about 20 wt% to about 30 wt%, based on the total weight of the mixture. By controlling the content of the second particles within these ranges, the cycle performance of the solid battery may be further enhanced.

The binder included in the anode active material layer 22 may be, for example, styrene-butadiene rubber (SBR), polytetrafluoroethylene, polyvinylidene fluoride, polyethylene, vinylidene fluoride/hexafluoropropylene copolymer, polyacrylonitrile, polymethyl methacrylate, etc., but is not necessarily limited thereto and any binder used in the relevant technical field may be used. The binder may be composed of a single type of binder or a combination of multiple different binders.

By including a binder, the anode active material layer 22 is stabilized on the anode current collector 21. Additionally, during the charging and discharging process, the binder helps suppress cracking in the anode active material layer 22, even when its volume changes or its relative position shifts. For example, if the anode active material layer 22 does not include a binder, it may easily detach from the anode current collector 21. If the anode active material layer 22 detaches, it exposes parts of the anode current collector 21, which may then come into contact with the solid electrolyte layer, increasing the likelihood of short circuits. The anode active material layer 22 may be prepared by applying a slurry, in which the constituent materials of the anode active material layer 22 are dispersed, onto the anode current collector 21, followed by drying. The inclusion of a binder in the anode active material layer 22 allows stable dispersion of the anode active material within the slurry. For example, when applying the slurry onto the anode current collector 21 using the screen-printing method, it is possible to prevent screen clogging (e.g., clogging caused by agglomerates of the anode active material).

The anode active material layer 22 may further include additives, such as fillers, coating agents, dispersants, and ionic conductive auxiliary agents, which are conventionally used in all solid batteries.

The thickness of the anode active material layer 22 may be, for example, 50% or less, 40% or less, 30% or less, 20% or less, 10% or less, or 5% or less of the thickness of the cathode active material layer 12, 12a, 12b. The thickness of the anode active material layer 22 may be, for example, about 1 micrometers ($\mu$m) to about 20 $\mu$m, about 2 $\mu$m to about 10 $\mu$m, or about 3 $\mu$m to about 7 $\mu$m. If the thickness of the anode active material layer 22 is excessively thin, lithium dendrites formed between the anode active material layer 22 and the anode current collector 21 may cause the anode active material layer 22 to collapse, making it difficult to improve the cycle characteristics of the solid battery. If the thickness of the anode active material layer 22 increases excessively, the energy density of the solid battery decreases and the internal resistance of the all solid battery due to the anode active material layer 22 increases, making it difficult to improve the cycle characteristics of the all solid battery.

If the thickness of the anode active material layer 22 decreases, for example, the charging capacity of the anode active material layer 22 also decreases. The charge capacity of the anode active material layer 22 may be, for example, 50 % or less, 40 % or less, 30 % or less, 20 % or less, 10 % or less, 5 % or less, 2 % or less, or 1 % or less compared to the charge capacity of the cathode active material layer 12. The charge capacity of the anode active material layer 22 may be, for example, about 0.1 % to about 50 %, about 0.1 % to about 40 %, about 0.1 % to about 30 %, about 0.1 % to about 20 %, about 0.1 % to about 10 %, about 0.1 % to about 5 %, or about 0.1 % to about 2 % compared to the charge capacity of the positive active material layer 12. If the charge capacity of the anode active material layer 22 is too small, the thickness of the anode active material layer 22 becomes very thin, so that lithium dendrites formed between the anode active material layer 22 and the anode current collector 21 during repeated charge and discharge processes may collapse the anode active material layer 22, making it difficult to improve the cycle characteristics of the all solid battery. If the charge capacity of the anode active material layer 22 increases excessively, the energy density of the all solid battery decreases and the internal resistance of the all solid battery due to the anode active material layer 22 increases, making it difficult to improve the cycle characteristics of the all solid battery.

The charge capacity of the cathode active material layer 12 is obtained by multiplying the charge capacity density (milliampere-hours per gram (mAh/g)) of the cathode active material by the mass of the cathode active material in the cathode active material layer 12. If multiple types of cathode active materials are used, the charge capacity density $\times$ mass

is calculated for each cathode active material, and the total sum represents the charge capacity of the cathode active material layer 12. The charge capacity of the anode active material layer 22 is also calculated in the same way. That is, the charge capacity of the anode active material layer 22 is obtained by multiplying the charge capacity density (mAh/g) of the anode active material by the mass of the anode active material in the anode active material layer 22. If multiple types of anode active materials are used, the charge capacity density × mass is calculated for each anode active material, and the total sum represents the charge capacity of the anode active material layer 22. Here, the charge capacity density of the cathode active material and anode active material is estimated using a solid half-cell using lithium metal as a counter electrode. The charge capacity of the cathode active material layer 12 and the anode active material layer 22 is directly measured by measuring the charge capacity using a solid half-cell. By dividing the measured charge capacity by the mass of the respective active material, the charge capacity density is obtained. Alternatively, the charge capacity of the cathode active material layer 12 and the anode active material layer 22 may be the initial charge capacity measured at the time of the first charge cycle.

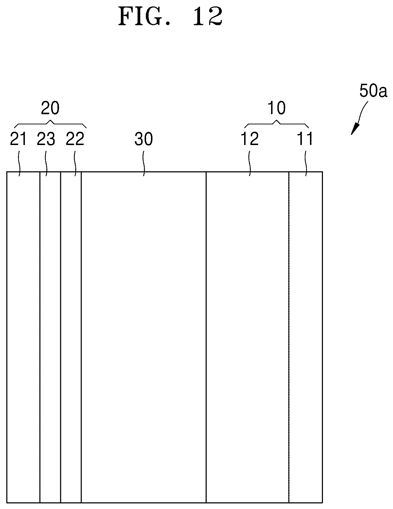

Referring to FIG. 12, the solid battery 50a may further include, for example, a metal layer 23 disposed between the anode current collector 21 and the anode active material layer 22. The metal layer 23 may be a metal foil or a plated metal layer. The metal layer 23 may contain lithium or a lithium alloy. Therefore, the metal layer 23 may function as a lithium reservoir, for example. The lithium alloy may include, for example, Li-Al alloy, Li-Sn alloy, Li-In alloy, Li-Ag alloy, Li-Au alloy, Li-Zn alloy, Li-Ge alloy, or Li-Si alloy, but is not limited to these and may include any lithium alloy commonly used in the field. The metal layer 23 may consist of lithium, one type of lithium alloy, or multiple types of lithium alloys.

The thickness of the metal layer 23 is not particularly limited, but it may range from about 1 μm to about 200 μm, about 1 μm to about 100 μm, about 1 μm to about 70 μm, about 1 μm to about 50 μm, about 1 μm to about 30 μm, or about 1 μm to about 20 μm. If the thickness of the metal layer 23 is too thin, it may be difficult for the metal layer 23 to perform the role of a lithium reservoir. If the thickness of the metal layer 23 is too thick, the mass and volume of the solid battery may increase and the cycle characteristics may deteriorate. The metal layer 23 may be, for example, a metal foil having a thickness within these ranges.

In the-all solid battery 50a, the metal layer 23 may be placed between the anode current collector 21 and the anode active material layer 22 before assembling the all solid battery 40a, or may be deposited between the anode current collector 21 and the anode active material layer 22 by charging after assembling the all solid battery 50a. When a metal layer (23) is placed between the anode current collector (21) and the anode active material layer (22) before assembling the solid battery 50a, the metal layer (23) is a metal layer containing lithium and thus functions as a lithium reservoir. For example, lithium foil may be placed between the anode current collector 21 and the anode active material layer 22 before assembling the-all solid battery 50a. As a result, the cycle characteristics of the-all solid battery 50a including the metal layer 23 may be further improved. If the metal layer 23 is deposited through charging after assembling the-all solid battery 50a, the energy density of the-all solid battery 50a increases since the metal layer 23 is not included at the time of assembly. For example, during the charging of the-all solid battery 50a, the anode active material layer 22 is charged beyond its storage capacity. That is, the anode active material layer 22 is overcharged. During the initial stage of charging, lithium is absorbed into the anode active material layer 22. The anode active material included in the anode active material layer 22 forms an alloy or compound with the lithium ions that have moved from the cathode layer 10. When charging exceeds the capacity of the anode active material layer 22, lithium may be deposited at the rear surface of the anode active material layer 22, that is, between the anode current collector 21 and the anode active material layer 22, and the deposited lithium may form a metal layer corresponding to the metal layer 23. The metal layer 23 may be a metal layer mainly composed of lithium, i.e., metallic lithium. This result is obtained, for example, when the anode active material included in the anode active material layer 22 is composed of a material that forms an alloy or compound with lithium. During discharge, the lithium in the anode active material layer 22 and the metal layer 23, i.e., the lithium in the metal layer, may be ionized and move toward the cathode layer 10. Therefore, in the solid battery 50a, lithium may be used as the anode active material. In addition, since the anode active material layer 22 covers the metal layer 23, it may function as a protective layer for the metal layer 23, i.e., the metal layer, and at the same time, it may play a role in suppressing the precipitation and growth of lithium dendrites. Accordingly, short circuit and capacity reduction of the solid battery 50a may be suppressed, and as a result, the cycle characteristics of the solid battery 50a are improved. Furthermore, if the metal layer 23 is formed during charging after assembling the solid battery 50a, the region between the anode current collector 21 and the anode active material layer 22 is, for example, a Li-free region that does not contain lithium Li in the initial state or after discharge of the all solid battery 50a.

The anode current collector 21 may be composed of, for example, a material that does not react with lithium, i.e., does not form either an alloy or compound. The materials constituting the anode collector 21 may include, but are not necessarily limited to, copper (Cu), stainless steel, titanium (Ti), iron (Fe), cobalt (Co), and nickel (Ni), and any material that can be used as an electrode collector in the relevant technical field may be used. The anode current collector 21 may be composed of a single type of metal among the aforementioned metals or may be made of an alloy or a coated material of two or more metals. The anode collector 21 may be, for example, in the form of a plate or a foil.

The solid battery 50, 50a may further include, for example, a thin film (not shown) containing an element capable of forming an alloy with lithium on the anode collector 21. The thin film may be placed between the anode current collector 21 and the anode active material layer 22. The thin film may include, for example, an element capable of forming an alloy with lithium. Such an element may include, for example, gold (Au), silver (Ag), zinc (Zn), tin (Sn), indium (In), silicon (Si), aluminum (Al), and bismuth (Bi), but is not necessarily limited to these, as any element capable of forming an alloy with lithium in the field may be used. The thin film may be composed of a single type of metal among these or may be made of an alloy of multiple types of metals. By positioning the thin film on the anode current collector 21, for example, the deposition morphology of the metal layer 23 precipitated between the thin film and the anode active material layer 22 becomes more planar, thereby further improving the cycle characteristics of the solid battery 50a.

The thickness of the thin film may be, for example, about 1 nm to about 800 nm, about 10 nm to about 700 nm, about 50 nm to about 600 nm, or about 100 nm to about 500 nm. If the thickness of the thin film is less than 1 nm, it may be difficult for the thin film to perform its function. If the thickness of the thin film is too thick, the thin film itself absorbs lithium, which reduces the amount of lithium precipitation from the anode, lowering the energy density of the solid battery and deteriorating the cycle characteristics of the solid battery 50, 50a. The thin film may be formed on the anode current collector 21 by, for example, a vacuum deposition method, a sputtering method, a plating method, etc., but is not necessarily limited to these methods, and any method capable of forming a thin film in the relevant technical field is possible.

[All solid battery preparation method]

According to another embodiment of the disclosure, a method of preparing an all solid battery may include: providing a first laminate including a cathode and a first solid electrolyte layer on the cathode, and a second laminate including an anode and a second solid electrolyte layer on the anode; providing an interlayer on one or more surface of the first solid electrolyte layer of the first laminate and the second solid electrolyte layer of the second laminate; stacking the first laminate and the second laminate such that the first solid electrolyte layer of the first laminate and the second solid electrolyte layer of the second laminate face the other to prepare a third laminate; and applying pressure to the third laminate to manufacture the all solid battery. The interlayer may include a tackifier.

In the method of preparing a solid battery, the first laminate and the second laminate may be prepared separately and then further laminated and pressurized, thereby enabling the solid battery to be continuously prepared, for example, in a roll-to-roll manner. Because solid batteries may be prepared continuously, it is suitable for mass production of all solid batteries.

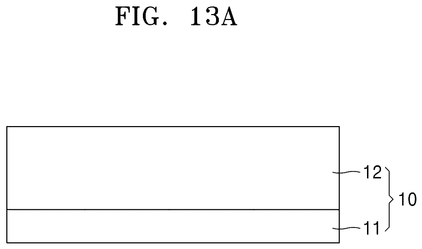

FIGS. 13A to 13G are cross-sectional views showing a method of manufacturing a solid battery 50 according to an embodiment.

First, a first laminate including a cathode 10 and a first solid electrolyte layer 30a on the cathode 10 is prepared.

Referring to FIG. 13A, a cathode 10 is prepared. The cathode 10 may be prepared, for example, using the method for manufacturing the cathode 10 of the solid battery 50 described above related to Fig. 7-11. The cathode 10 may include, for example, a cathode current collector 11 and a cathode active material layer 12.

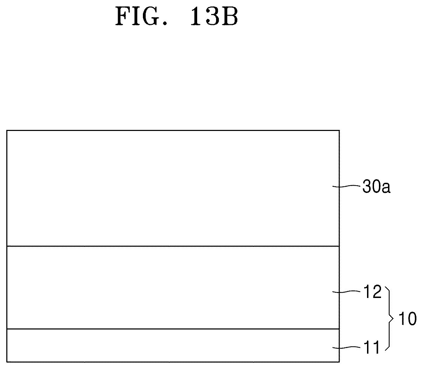

Referring to FIG. 13B, a first solid electrolyte layer 30a may be disposed on the cathode active material layer 12. The first solid electrolyte layer 30a may be prepared, for example, by applying a slurry of the first solid electrolyte layer 30a, which may be prepared by mixing a first solid electrolyte, a binder, and a solvent onto the cathode active material layer 12, followed by drying. Alternatively, the first solid electrolyte layer 30a may be prepared in the form of a solid electrolyte sheet by applying a slurry of the first solid electrolyte layer 30a, which may be prepared by mixing a solid electrolyte, a binder, and a solvent, onto a separate substrate, followed by drying and subsequent separation from the substrate. The solid electrolyte sheet may be placed on the cathode active material layer 12. The solid electrolyte sheet may be, for example, a self-standing solid electrolyte film. Any solvent may be used as long as it can dissolve the binder and uniformly mix the solid electrolyte and the binder to produce a slurry of the first solid electrolyte layer 30a. The solvent may be, for example, octyl acetate.

The first solid electrolyte layer 30a may be placed on the cathode 10 to prepare a first laminate. The first laminate may be additionally pressurized. By pressurizing, the uniformity of the surface of the first solid electrolyte layer 30a may be improved, and the bonding strength between the cathode active material layer 12 and the first solid electrolyte layer 30a may be improved.

Next, a second laminate including an anode 20 and a second solid electrolyte layer 30b on the anode 20 is prepared.

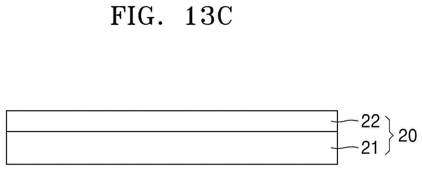

Referring to FIG. 13C, an anode 20 is prepared. The anode 20 may be prepared, for example, using the method of preparing the anode 20 of the solid battery 50 described above. The anode 20 may include, for example, an anode current collector 21 and an anode active material layer 22.

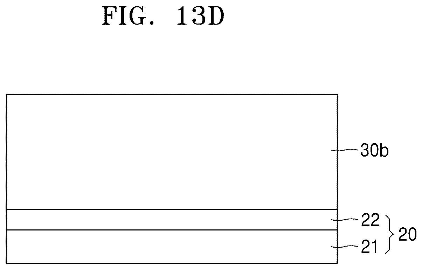

Referring to FIG. 13D, a second solid electrolyte layer 30b may be disposed on the anode active material layer 22. The second solid electrolyte layer 30b may be prepared by, for example, applying a slurry of the second solid electrolyte layer 30b, which may be prepared by mixing a second solid electrolyte, a binder, and a solvent onto the anode active material layer 22, followed by drying. Alternatively, the second solid electrolyte layer 30b may be prepared in the form of a solid electrolyte sheet by applying a slurry of the second solid electrolyte layer 30b, which may be prepared by mixing a solid electrolyte, a binder, and a solvent, onto a separate substrate, followed by drying and subsequent separation from the substrate. The solid electrolyte sheet may be placed on the anode active material layer 22. The solid electrolyte sheet may be, for example, a self-standing solid electrolyte film. Any solvent may be used as long as it can dissolve the binder and uniformly mix the solid electrolyte and the binder to produce a slurry of the second solid electrolyte layer 30b. The solvent may be, for example, octyl acetate.

The second solid electrolyte layer 30b is placed on the anode 20 to prepare a second laminate. The second laminate may be additionally pressurized. By pressurizing, the uniformity of the surface of the second solid electrolyte layer 30b may be improved, and the bonding strength between the anode active material layer 22 and the second solid electrolyte layer 30b may be improved.

Next, an interlayer including a tackifier is provided on one or more surface of the first solid electrolyte layer 30a of the first laminate and the second solid electrolyte layer 30b of the second laminate.

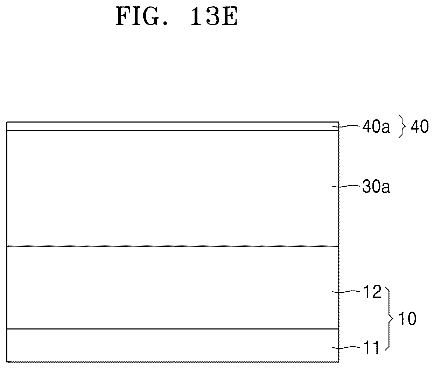

Referring to FIG. 13E, a first interlayer 40a may be provided on the first solid electrolyte layer 30a. The first interlayer 40a may include a tackifier.

The first interlayer 40a may be provided by coating the first solid electrolyte layer 30a with a composition for forming the first interlayer 40a, which may include a binder, a tackifier, and a solvent. The coating may be applied using, for example, spray coating or bar coating. Any solvent may be used as long as it can dissolve the binder and the tackifier and can uniformly mix the binder and the tackifier to produce a composition for forming the first interlayer 40a. The solvent may be, for example, methylene chloride.

Although not shown in the drawings, a second interlayer 40b may be additionally provided on the other surface of first solid electrolyte layer 30a.

Next, the first laminate and the second laminate may be stacked to prepare a third laminate, so that the first solid electrolyte layer 30a of the first laminate and the second solid electrolyte layer 30b of the second laminate may face each other.

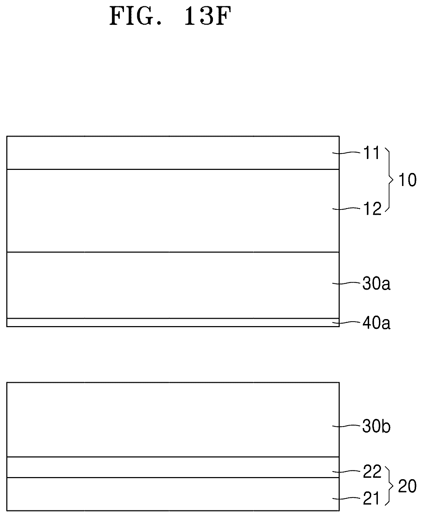

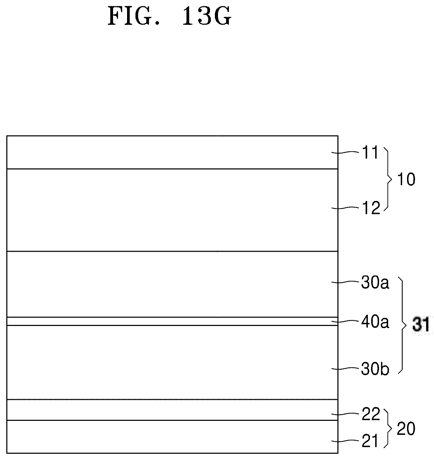

Referring to FIGS. 13F and 13G, the first solid electrolyte layer 30a of the first laminate and the second solid electrolyte layer 30b of the second laminate may be arranged to face each other. The first laminate and the second laminate may be stacked to prepare the third laminate.

Since the first interlayer 40a disposed on the first solid electrolyte layer 30a may include a binder and a tackifier, the first laminate, including a cathode 10, which may include the cathode active material layer 12 arranged on the cathode current collector 11, and the second laminate including an anode 20, which may include an anode active material layer 22 arranged on an anode current collector 21, may be densely stacked without pores. The second solid electrolyte layer 30b may be disposed above the anode 20.

Next, the third layer is pressurized to manufacture the solid battery 50.

Pressurization may enhance the bonding strength between the first laminate and the second laminate. The first laminate and the second laminate may be stacked and pressed simultaneously or sequentially, for example, in a roll-to-roll process to prepare the solid secondary battery 50.

According to another embodiment of the disclosure, a method of preparing an all solid battery may include: providing a first laminate including a cathode and a third solid electrolyte layer on the cathode, and a second laminate including an anode and a fourth solid electrolyte layer on the anode; stacking the first laminate and the second laminate such that the third solid electrolyte layer of the first laminate and the fourth solid electrolyte layer of the second laminate may face each other to prepare a third laminate; and applying pressure to the third laminate to manufacture the all solid battery. One or more of the third solid electrolyte layer and the fourth solid electrolyte layer may include a binder and a tackifier. The method of preparing a solid battery may be the same as the method of preparing a solid battery including the interlayer, except that the providing an interlayer may be omitted.

Hereinafter, the disclosure will be described in detail with reference to examples and comparative examples but is not limited to the following examples.

Preparation of lithium ion conductors

Example 1: Cathode/Solid electrolyte layer (SE+TA)/Solid electrolyte layer (SE+TA)/Anode (Second structure)

Cathode preparation

As the cathode active material, $LiNi_{0.8}Co_{0.15}Al_{0.05}O_2$ (NCM) coated with $Li_2O$-$ZrO_2$ (LZO) was prepared. The solid electrolyte, $Li_6PS_5Cl$, an Argyrodite-type crystalline solid electrolyte (D50 = 0.5 $\mu$m, crystalline), was used. As the binder, polytetrafluoroethylene (PTFE) was selected. As the conductive agent, carbon nanofibers (CNF) were used. These materials were mixed in a weight ratio of cathode active material : solid electrolyte : conductive agent : binder of 84 :

11.5 : 3 : 1.5 with a xylene solvent to form a slurry, which was then molded into a sheet. The sheet was vacuum-dried at 40 °C for 8 hours to prepare a cathode sheet. The prepared cathode sheet was placed on a carbon-coated surface of an aluminum foil cathode current collector and roll-pressed to prepare a cathode having a cathode current collector/cathode active material layer structure. The total thickness of the cathode was approximately 120 μm. The thickness of the cathode active material layer was approximately 95 μm, and the thickness of the carbon-coated aluminum foil was approximately 25 μm.

Anode preparation

As the anode current collector, a 10 μm thick SUS foil was prepared. As the anode active material, carbon black (CB) with a primary particle size of about 30 nm and silver (Ag) particles with an average particle diameter of approximately 60 nm were used.

A mixed powder of 4 grams (g) of carbon black (CB) and silver particles in a weight ratio of 3:1, respectively, was placed in a container, and 4 g of an NMP solution containing 7 wt% of a PVDF binder (#9300 from Kureha) was added to prepare a mixed solution. NMP was gradually added to the prepared mixed solution while stirring to produce a slurry. The prepared slurry was applied onto an SUS sheet using a bar coater, dried in air at 80 °C for 10 minutes, and then vacuum-dried at 40 °C for 10 hours to prepare a laminate. The prepared laminate was roll pressed to prepare an anode having a first anode active material layer/anode current collector structure. The thickness of the first anode active material layer was approximately 15 μm.

Preparation of solid electrolyte film

A mixture was prepared by adding 5 parts by weight of an acrylic binder (Zeon A751, molecular weight 100,000 to 500,000 Dalton) as a binder and 5 parts by weight of a solid petroleum resin (HIKOREZ T-3100, Kolon Industries) as a tackifier to 90 parts by weight of $Li_6PS_5Cl$ solid electrolyte ($D_{50}$=3.0 μm, crystalline), which is an Argyrodite type crystalline structure. Octyl acetate was gradually added to the prepared mixture while stirring to form a slurry. The prepared slurry was coated onto a nonwoven fabric placed on a PET substrate using a bar coater and dried at 80 °C for 10 minutes in air to form a laminated structure. The prepared laminate was vacuum dried at 80 °C for 2 hours. The dried laminate was then separated from the substrate to prepare a solid electrolyte film. The solid electrolyte film is a self-standing solid electrolyte film. The thickness of the solid electrolyte self-supporting film was approximately 30 μm.

The solid petroleum resin (HIKOREZ T-3100, Kolon Industries) is a C5-C9 copolymer resin, wherein the C9 fraction content is 10 wt% or more of the total weight of the C5 and C9 fractions. The C5-C9 copolymer is derived from a mixture of C5 and C9 fractions, which includes 1,3-pentadiene, isoprene, cyclopentadiene, vinyltoluene, styrene, and indene. The softening point of the solid petroleum resin (HIKOREZ T-3100, Kolon Industries), measured according to ASTM E 28, was 100 °C, and its molecular weight, determined by gel permeation chromatography (GPC) using a polystyrene standard sample, was 2,000 Dalton.

Preparation of the first laminate - cathode/solid electrolyte

The solid electrolyte self-standing film was placed on the cathode active material layer of the cathode, and a heated roll press was applied at 100 °C with a linear pressure of 3 tons per centimeter (ton/cm) to prepare the first laminate with a cathode/first solid electrolyte layer structure.

Preparation of the second laminate - anode/solid electrolyte

The solid electrolyte self-standing film was placed on the first anode active material layer of the anode, and a heated roll press was applied at 100 °C with a linear pressure of 2.5 ton/cm to prepare the second laminate with an anode/second solid electrolyte layer structure.

Preparation of the solid secondary battery

The first laminate and the second laminate were stacked such that the first solid electrolyte layer and the second solid electrolyte layer faced each other. A heated roll press was then applied at 100 °C with a linear pressure of 0.2 ton/cm at a speed of 0.5 meters per minute (mpm) to prepare the solid secondary battery.

The solid secondary batteries have a structure of cathode/solid electrolyte layer/solid electrolyte layer/anode.

Example 2: Cathode/Solid Electrolyte Layer (SE+TA)/Solid Electrolyte Layer (SE+TA)/Anode (Second Structure)

A solid electrolyte film and a solid secondary battery were prepared in the same manner as in Example 1, except that 5 parts by weight of an acrylic-based binder and 1.5 parts by weight of solid petroleum resin (HIKOREZ T-3100, KOLON Industries) were used for 90 parts by weight of the solid electrolyte when preparing the solid electrolyte film.

Example 3: Cathode/Solid Electrolyte Layer (SE+TA)/Solid Electrolyte Layer (SE+TA)/Anode (Second Structure))

A solid electrolyte film and a solid secondary battery were prepared in the same manner as in Example 1, except that 5 parts by weight of an acrylic binder and 0.75 parts by weight of solid petroleum resin (HIKOREZ T-3100, KOLON Industries) were used for 90 parts by weight of the solid electrolyte in the preparation of the solid electrolyte film.

Example 4: Cathode/Solid Electrolyte Layer (SE+TA)/Solid Electrolyte Layer (SE+TA)/Anode (Second Structure)

A solid electrolyte film and a solid secondary battery were prepared in the same manner as in Example 1, except that solid petroleum resin (HIKOREZ T-3100, KOLON Industries) was changed to solid petroleum resin (HIKOREZ H-2300, KOLON Industries). The solid-state petroleum resin (HIKOREZ H-2300, KOLON Industries) was a hydrogenated C5-C9 copolymer resin, with a C9 fraction content of less than 10 wt% of the total weight of the C5 fraction and the C9 fraction. The C5-C9 copolymer is derived from a mixture of C5 fractions and C9 fractions, which includes dicyclopentadiene, vinyltoluene, styrene, indene, etc. The softening point of the solid petroleum resin (HIKOREZ H-2300, Kolon Industries), measured according to ASTM E 28 was 100 °C, and the molecular weight measured by gel permeation chromatography (GPC) using a polystyrene standard sample, was 570 Dalton.

Example 5: Cathode/Solid Electrolyte Layer (SE+TA)/Solid Electrolyte Layer (SE+TA)/Anode (Second Structure)

A solid electrolyte film and a solid secondary battery were prepared in the same manner as in Example 1, except that solid petroleum resin (HIKOREZ T-3100, Kolon Industries) was changed to liquid petroleum resin (PMR OLG, Kolon Industries).
The liquid petroleum resin (PMR OLG, Kolon Industries) was a liquid C9 oligomer resin. The liquid C9 oligomer resin was derived from a composition containing high-purity polystyrene. The softening point of the liquid petroleum resin (PMR OLG, Kolon Industries), measured according to ASTM E 28, was 178 °C, and its molecular weight, measured by gel permeation chromatography (GPC) using a polystyrene standard, was 450 Dalton.

Example 6: Cathode/Solid Electrolyte Layer (SE+TA)/Solid Electrolyte Layer (SE+TA)/Anode (Second Structure)

A solid electrolyte film and a solid secondary battery were prepared in the same manner as in Example 1, except that 5 parts by weight of an acrylic binder and 1.5 parts by weight of liquid petroleum resin (PMR OLG, Kolon Industries) were used for 90 parts by weight of the solid electrolyte in the preparation of the solid electrolyte film.

Example 7: Cathode/Solid Electrolyte Layer (SE+TA)/Solid Electrolyte Layer (SE+TA)/Anode (Second Structure)

A solid electrolyte film and a solid secondary battery were prepared in the same manner as in Example 1, except that 5 parts by weight of an acrylic binder and 0.75 parts by weight of liquid petroleum resin (PMR OLG, Kolon Industries) were used for 90 parts by weight of the solid electrolyte in the preparation of the solid electrolyte film.

Example 8: Cathode/Solid Electrolyte Layer (SE+TA)/Solid Electrolyte Layer (SE+TA)/Anode (Second Structure)

A solid electrolyte film and a solid secondary battery were prepared in the same manner as in Example 1, except that solid petroleum resin (HIKOREZ T-3100, KOLON Industries) was changed to solid petroleum resin (HIKOREZ A-1100, KOLON Industries). The solid petroleum resin (HIKOREZ A-1100, KOLON Industries) was a hydrogenated C5 resin. C5 resin is derived from C5 fraction, which contains 1,3-pentadiene, isoprene, and cyclopentadiene. The softening point of the solid petroleum resin (HIKOREZ A-1100, Kolon Industries) measured according to ASTM E 28 was 100 °C, and the molecular weight measured against a polystyrene standard sample by gel permeation chromatography (GPC) was 1950 Dalton.

Comparative Example 1: Cathode/Solid Electrolyte Layer (SE)/Solid Electrolyte Layer (SE)/Anode

The cathode and anode were prepared using the same method as in Example 1.

A solid electrolyte film was prepared using the same method as Example 1, except that 5 parts by weight of an acrylic binder was used per 90 parts by weight of the solid electrolyte, and no tackifier was used. A first laminate, a second laminate, and a solid secondary battery were prepared in the same manner as in Example 1, except that a solid electrolyte layer not including a tackifier was used.

Example 9: Cathode/Solid Electrolyte Layer (SE+TA)/Interlayer (TA)/Solid Electrolyte Layer (SE+TA)/Anode (First Structure)

The cathode, anode, solid electrolyte film, first laminate, and second laminate were prepared using the same method as in Example 1.

Preparation of solid battery

A mixture was prepared by adding 5 parts by weight of an acrylic binder and 1.5 parts by weight of petroleum resin (HIKOREZ T-3100, Kolon Industries). The prepared mixture was dissolved in a methylene chloride ($CH_2Cl_2$) solvent to prepare an interlayer-forming composition. The interlayer-forming composition was spray-coated onto the first solid electrolyte layer of the first laminate and dried to introduce an interlayer. The loading level of the interlayer-forming composition was approximately 1.0 mg/cm$^2$ in dry weight. The first and the second laminates, into which an interlayer was introduced, were stacked such that the first solid electrolyte and the second solid electrolyte layers face each other, followed by roll pressing at a linear pressure of 0.2 ton/cm at 100 °C with a speed of 0.5 mpm to prepare a solid secondary battery. The resulting solid secondary battery had a cathode/solid electrolyte layer/interlayer/solid electrolyte layer/anode structure.

Example 10: Cathode/Solid Electrolyte Layer (SE+TA)/Interlayer (TA)/Solid Electrolyte Layer (SE+TA)/Anode (First Structure)

The cathode and the anode were prepared using the same method as in Example 1. A solid electrolyte film was prepared in the same manner as in Example 1, except that 5 parts by weight of an acrylic binder was used relative to 90 parts by weight of the solid electrolyte and no tackifier was used.

A first laminate and a second laminate were prepared in the same manner as in Example 1, except that the solid electrolyte films which did not contain a tackifier were used.

Preparation of solid secondary battery

A mixture was prepared by adding 5 parts by weight of acrylic binder and 1.5 parts by weight of petroleum resin (HIKOREZ T-3100, KOLON Industries). The prepared mixture was dissolved in a methylene chloride ($CH_2Cl_2$) solvent to prepare an interlayer-forming composition. The interlayer-forming composition was spray-coated onto the first solid electrolyte layer of the first laminate and dried to introduce the interlayer. The loading level of the interlayer-forming composition was about 1.0 mg/cm$^2$ in dry weight. The first and the second laminates, into which an interlayer was introduced, were stacked such that the first solid electrolyte and the second solid electrolyte layers face each other, followed by roll pressing at a linear pressure of 0.2 ton/cm at 100 °C with a speed of 0.5 mpm to prepare a solid secondary battery. The resulting solid secondary battery had a cathode/solid electrolyte layer/interlayer/solid electrolyte layer/anode structure.

Evaluation Example 1: Ionic Conductivity Measurement

The impedance of the solid secondary batteries prepared in Examples 1 to 10 and Comparative Example 1 was measured using an impedance analyzer (Solartron 1400A/1455A impedance analyzer) with the two-probe method. The frequency range was set from 0.17 megahertz (MHz) to 1 hertz (Hz), and the amplitude voltage was 10 millivolts (mV). Measurements were conducted at 1 atm and 25 °C under an air atmosphere. From the Nyquist plot of the impedance measurement results, the resistance values were obtained, and the ionic conductivity at the interface between the laminated solid electrolyte layers was calculated. The results are shown in Table 1 below.

Table 1

|  | Ionic conductivity [milliSiemen per centimeter (mS/cm)] |
|---|---|
| Example 1 | 0.278 |
| Example 2 | 0.239 |

(continued)

| | Ionic conductivity [milliSiemen per centimeter (mS/cm)] |
|---|---|
| Example 3 | 0.162 |
| Example 4 | 0.177 |
| Example 5 | 0.163 |
| Example 6 | 0.316 |
| Example 7 | 0.247 |
| Example 8 | 0.151 |
| Example 9 | 0.165 |
| Example 10 | 0.180 |
| Comparative Example 1 | 0.141 |

As shown in Table 1, the solid secondary batteries of Examples 1 to 10 exhibited improved ionic conductivity at the interface compared to the battery of Comparative Example 1.

It was determined that the enhanced tackiness between the laminated solid electrolyte layers in the solid secondary batteries of Examples 1 to 10 led to a reduction in interfacial resistance, thereby resulting in an improvement in ionic conductivity at the interface between the laminated solid electrolyte layers.

Evaluation Example 2: charge and discharge Characteristics Evaluation

The charge and discharge characteristics of the solid secondary batteries prepared in Examples 1 to 10 and Comparative Example 1 were evaluated through charge and discharge tests under the following conditions. The tests were conducted by placing the solid secondary batteries in a constant-temperature chamber at 45 °C.

The solid secondary batteries were charged at 0.1 C rate with a constant current until the voltage reached 4.3 volts (V) (vs. Li). Then, the charging mode switched to constant voltage mode, maintaining 4.3 V while reducing the current to 0.05 C rate until cut-off. During discharge, the batteries were discharged at 0.1 C rate with a constant current until the voltage dropped to 2.5 V (vs. Li) (Formation Cycle).

After the formation cycle, the solid secondary batteries were charged at 0.2 C rate with constant current until the voltage reached 4.3 V (vs. Li). Then, the batteries were discharged at 0.1 C rate with constant current until the voltage dropped to 2.5 V (vs. Li) (First Cycle).

After the first cycle, the solid secondary batteries were charged at 0.2 C rate with constant current until the voltage reached 4.3 V (vs. Li). Then, the batteries were discharged at 0.33 C rate with constant current until the voltage dropped to 2.5 V (vs. Li) (Second Cycle).

A 10-minute rest period was applied after each charge/discharge cycle. The results of the charge and discharge test are presented in Table 2.

The initial efficiency is calculated using Equation 1:

Initial Efficiency [%] = [Discharge Capacity of the First Cycle/Charge Capacity of the First Cycle] $\times$ 100      Equation 1

Evaluation Example 3: Direct Current Internal Resistance (DC-IR) Evaluation

The direct current internal resistance (DC-IR) of the solid secondary batteries prepared in Examples 1 to 10 and Comparative Example 1 was measured using the following method.

In the first cycle, the battery was charged at a current of 0.2 C up to the voltage corresponding to a state of charge (SOC) of 20 volt percent (v%).

Afterward, a constant current discharge at 3.0 C was performed for 10 seconds, followed by a constant current discharge at 0.2 C for 10 seconds, and then another constant current discharge at 3.0 C for 10 seconds.

The DC-IR (R = $\Delta V/\Delta I$) was calculated based on the ratio of the average voltage change ($\Delta V$) to the average current change ($\Delta I$) observed during each constant current discharge at different C-rates.

The average of these calculated values was recorded as the measured DC-IR.

Table 2

|  | 0.1C discharge capacity [mAh/g] | 0.33C discharge capacity [mAh/g] | Initial Efficiency [%] | DCIR [ohm-square centimeters ($\Omega \cdot cm^2$)] |
|---|---|---|---|---|
| Example 1 | 195 | 182 | 82.7 | 39.5 |
| Example 2 | 207 | 192 | 82.3 | 37.3 |
| Example 6 | 193 | 174 | 82.9 | 45.1 |
| Example 10 | 205 | 191 | 83.1 | 40.5 |
| Comparative Example 1 | 193 | 166 | 81.5 | 56.7 |

As shown in Table 2, the solid secondary batteries from Examples 1, 2, 6, and 10 exhibited improved high-rate performance and cycle life characteristics compared to Comparative Example 1. Additionally, the increase in internal resistance was suppressed.

It was determined that in the solid secondary batteries from Examples 1 to 10, the enhanced tackiness of the solid electrolyte membrane led to the suppression of void formation and cracking during charge and discharge cycles, thereby preventing degradation.

Evaluation Example 4: Battery Stability Evaluation

The charge and discharge characteristics of the solid secondary batteries from Examples 1 to 10 were evaluated through the following charge and discharge test. The test was conducted by placing the solid secondary battery in a thermostatic chamber at 45 °C.

First Cycle: The battery was charged at a constant current (CC) of 0.1C for 12.5 hours until the voltage reached 4.3V. The battery was then discharged at a constant current (CC) of 0.2 C for 12.5 hours until the voltage reached 2.5V.

Subsequent Cycles (2nd Cycle and Beyond): The same charging and discharging conditions as the first cycle were applied up to 100 cycles.

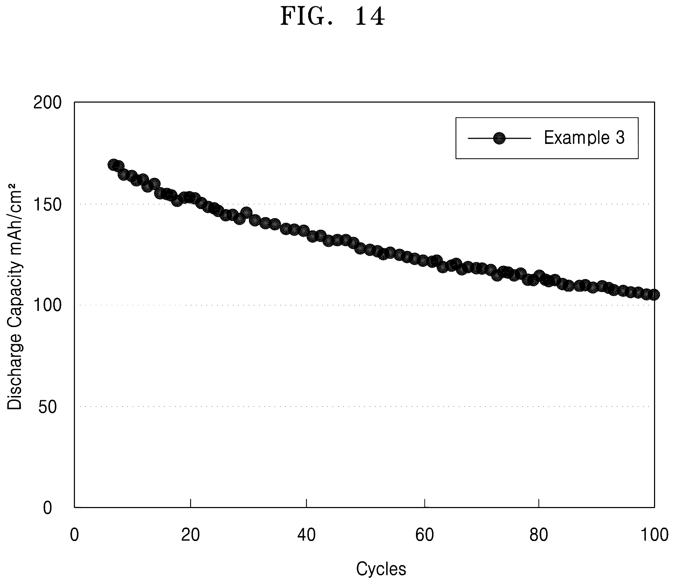

Referring to FIG. 14, it was confirmed that the solid battery prepared in Example 3 operated stably up to 100 cycles.

Although the disclosure has been described in terms of an embodiment, it is not limited thereto. Various modifications may be made within the scope of the claims, detailed description of the invention, and the accompanying drawings, and these modifications should also be considered within the scope of the invention.

According to an aspect of the disclosure, a solid battery may include a solid electrolyte layer including a tackifier, thereby suppressing the formation of voids and electrical disconnection during charge and discharge while offering enhanced tackiness and improved bonding strength.

According to another aspect of the disclosure, a method of preparing a novel solid battery is provided.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1. A solid battery comprising:

   a cathode; an anode; and a solid electrolyte layer between the cathode and the anode,
   wherein the solid electrolyte layer comprises one or a plurality of sub-solid electrolyte layers,
   wherein the solid electrolyte layer comprises an interlayer between the plurality of sub-solid electrolyte layers or does not comprise the interlayer,
   wherein at least one of the sub-solid electrolyte layer and the interlayer comprises a tackifier,
   the tackifier comprises a hydrocarbonaceous oligomer derived from an aliphatic chain monomer having 5 carbon atoms to 20 carbon atoms, an aromatic ring monomer having 6 carbon atoms to 20 carbon atoms, an aliphatic ring monomer having 5 carbon atoms to 20 carbon atoms, or a combination thereof.

2. The solid battery of claim 1,

wherein the sub-solid electrolyte layer comprises a first solid electrolyte layer, a second solid electrolyte layer, a third solid electrolyte layer, a fourth solid electrolyte layer and a fifth solid electrolyte layer,
wherein the solid electrolyte layer comprises
a first structure comprising a first solid electrolyte layer, a second solid electrolyte layer, and a first interlayer disposed between the first solid electrolyte layer and the second solid electrolyte layer;
a second structure comprising a third solid electrolyte layer and a fourth solid electrolyte layer; or
a third structure comprising a fifth solid electrolyte layer.

3. The solid battery of claims 1 or 2, wherein the tackifier comprises a mixture of a plurality of hydrocarbonaceous oligomers having different structures; and/or

wherein the number of the repeating units in the hydrocarbonaceous oligomer is 100 or less; and/or
wherein the tackifier further comprises an aliphatic chain monomer having 5 carbon atoms to 20 carbon atoms, an aromatic ring monomer having 6 carbon atoms to 20 carbon atoms, an aliphatic ring monomer having 5 carbon atoms to 20 carbon atoms, or a combination thereof.

4. The solid battery of any of claims 1-3, wherein
the tackifier comprises

i) an unsaturated aliphatic hydrocarbon chain monomer having 5 carbon atoms to 20 carbon atoms,

an oligomer of the unsaturated aliphatic hydrocarbon chain monomer having 5 carbon atoms to 20 carbon atoms,
or a combination thereof;

i-1) an hydrogenate of the unsaturated aliphatic hydrocarbon chain monomer having 5 carbon atoms to 20 carbon atoms,

an hydrogenate of the oligomer of the unsaturated aliphatic hydrocarbon chain monomer having 5 carbon atoms to 20 carbon atoms,
or a combination thereof;

ii) an unsaturated aromatic hydrocarbon ring monomer having 6 carbon atoms to 20 carbon atoms,

an oligomer of the unsaturated aromatic hydrocarbon ring monomer having 6 carbon atoms to 20 carbon atoms,
or a combination thereof;

ii-1) an hydrogenate of the unsaturated aromatic hydrocarbon ring monomer having 6 carbon atoms to 20 carbon atoms,

an hydrogenate of the oligomer of the unsaturated aromatic hydrocarbon ring monomer having 6 carbon atoms to 20 carbon atoms,
or a combination thereof;

iii) an unsaturated aliphatic hydrocarbon ring monomer having 5 carbon atoms to 20 carbon atoms,

an oligomer of the unsaturated aliphatic hydrocarbon ring monomer having 5 carbon atoms to 20 carbon atoms,
or a combination thereof; or

iii-1) an hydrogenate of the unsaturated aliphatic hydrocarbon ring monomer having 5 carbon atoms to 20 carbon atoms,

an hydrogenate of the oligomer of the unsaturated aliphatic hydrocarbon ring monomer having 5 carbon atoms to 20 carbon atoms,
or a combination thereof.

**5.** The solid battery of any of claims 1-4, wherein
the tackifier comprises

i) trans-1,3-pentadiene, oligomer of trans-1,3-pentadiene, cis-1,3-pentadiene, oligomer of cis-1,3-pentadiene, 2-methyl-2-butene, oligomer of 2-methyl-2-butene, or a combination thereof;
i-1) hydrogenate of trans-1,3-pentadiene, hydrogenate of oligomer of trans-1,3-pentadiene, hydrogenate of cis-1,3-pentadiene, hydrogenate of oligomer of cis-1,3-pentadiene, hydrogenate of 2-methyl-2-butene, hydrogenate of oligomer of 2-methyl-2-butene, or a combination thereof;
ii) styrene, oligomer of styrene, alpha-methylstyrene, oligomer of alpha-methylstyrene, vinyltoluene, oligomer of vinyltoluene, indene, oligomer of indene, or a combination thereof;
ii-1) hydrogenate of styrene, hydrogenate of oligomer of styrene, hydrogenate of alpha-methylstyrene, hydrogenate of oligomer of alpha-methylstyrene, hydrogenate of vinyltoluene, hydrogenate of oligomer of vinyltoluene, hydrogenate of indene, hydrogenate of oligomer of indene, or a combination thereof;
iii) cyclopentene, oligomer of cyclopentene, cyclopentadiene, oligomer of cyclopentadiene, dicyclopentadiene, oligomer of dicyclopentadiene, or a combination thereof; or
iii-1) hydrogenate of cyclopentene, hydrogenate of oligomer of cyclopentene, hydrogenate of cyclopentadiene, hydrogenate of oligomer of cyclopentadiene, hydrogenate of dicyclopentadiene, hydrogenate of oligomer of dicyclopentadiene, or a combination thereof.

**6.** The solid battery of any of claims 1-5, wherein
the tackifier is free of oxygen, nitrogen, fluorine, chlorine, sulfur, phosphorous, or a combination thereof.

**7.** The solid battery of any of claims 1-6, wherein

the tackifier comprises an amorphous hydrocarbonaceous oligomer,
the tackifier comprises the hydrocarbonaceous oligomer having a molecular weight of less than 10,000 Dalton,
the tackifier comprises the hydrocarbonaceous oligomer having a softening point measured according to ASTM E 28 of less than 160 °C, and
the tackifier comprises the hydrocarbonaceous oligomer having a glass transition temperature of less than 160 °C.

**8.** The solid battery of any of claims 1-7,

wherein the interlayer further comprises a binder, and
wherein an amount of the tackifier in the interlayer is 1 part to 100 parts by weight, based on 100 parts by weight of the binder;
preferably wherein a loading level of the binder and the tackifier in the first interlayer is 0.1 milligrams per square centimeter to 5 milligrams per square centimeter.

**9.** The solid battery of any of claims 1-8, wherein a thickness of the interlayer is 0.01 micrometers to 10 micrometers, and wherein the thickness of the interlayer is 50% or less than a thickness of the sub-solid electrolyte layer; and/or

wherein the interlayer comprises an interlayer solid electrolyte, and wherein the interlayer solid electrolyte comprises a sulfide-based solid electrolyte, an oxide-based solid electrolyte, a halide-based solid electrolyte, an oxyhalide-based solid electrolyte, or a combination thereof; and/or
wherein at least one of a plurality of the sub-solid electrolyte layers is free of the tackifier.

**10.** The solid battery of any of claims 2-9,

wherein each of the first solid electrolyte layer and the second solid electrolyte layer independently comprise: a first surface adjacent to the first interlayer; and a second surface opposite the first surface and spaced a distance from the first interlayer; and
a region between the first surface and the second surface that is free of the tackifier.

**11.** The solid battery of any of claims 2-10,

wherein one or both of the first solid electrolyte layer and the second solid electrolyte layer comprise a binder and the tackifier, and

if present, an amount of the tackifier in the first solid electrolyte layer, the second solid electrolyte layer, the third solid electrolyte layer, the fourth solid electrolyte layer, and the fifth solid electrolyte layer is independently 1 part to 100 parts by weight based on 100 parts by weight of the binder.

12. The solid battery of any of claims 2-11,
    wherein a thickness of the first solid electrolyte layer, the second solid electrolyte layer, the third solid electrolyte layer, the fourth solid electrolyte layer, and the fifth solid electrolyte layer is independently 5 micrometers to 200 micrometers.

13. The solid battery of any of claims 2-12,

    wherein the first solid electrolyte layer, the second solid electrolyte layer, the third solid electrolyte layer, the fourth solid electrolyte layer and the fifth solid electrolyte layer independently comprise a solid electrolyte,
    wherein the solid electrolyte comprises a sulfide-based solid electrolyte, an oxide-based solid electrolyte, a halide-based solid electrolyte, an oxyhalide-based solid electrolyte, or a combination thereof, and
    wherein the sub-solid electrolyte layer is a self-standing film.

14. The solid battery of any of claims 2-13,

    wherein the first structure, the second structure and the third structure each comprise a top surface and a bottom surface opposite the top surface, and
    the first structure, the second structure, and third structure comprise a second interlayer disposed on the top surface or a third interlayer disposed on the bottom surface.

15. A method of preparing a solid battery, comprising:

    providing a first laminate and a second laminate, the first laminate comprising a cathode and a first solid electrolyte layer on the cathode, and the second laminate comprising an anode and a second solid electrolyte layer on the anode;
    providing an interlayer, on one or more surfaces of the first solid electrolyte layer of the first laminate and the second solid electrolyte layer of the second laminate;
    stacking the first laminate and the second laminate such that the first solid electrolyte layer of the first laminate and the second solid electrolyte layer of the second laminate face the other to provide a third laminate; and
    applying pressure to the third laminate to prepare the solid battery,
    wherein the interlayer comprises a tackifier.

# FIG. 1

30a ⎫
40a ⎬ 31
30b ⎭

# FIG. 2

FIG. 3

# FIG. 4

FIG. 5

30e } 33

# FIG. 6

40b
30e } 33
40c

FIG. 7

FIG. 8

# FIG. 9

FIG. 10

# FIG. 11

FIG. 12

FIG. 13A

FIG. 13B

FIG. 13C

22 ⎫
21 ⎬ 20

FIG. 13D

FIG. 13E

FIG. 13F

FIG. 13G

FIG. 14

Europäisches
Patentamt

European
Patent Office

Office européen
des brevets

# EUROPEAN SEARCH REPORT

**Application Number**

EP 25 22 0232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2015 153460 A (FURUKAWA CO LTD) 24 August 2015 (2015-08-24) * paragraph [0047]; claims 1, 2 * ----- | 1-15 | INV. H01M10/052 H01M10/0562 |
| X | JP H02 301972 A (JAPAN SYNTHETIC RUBBER CO LTD; MATSUSHITA ELECTRIC INDUSTRIAL CO LTD) 14 December 1990 (1990-12-14) * page 4; claim 1 * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 15 April 2026 | Koessler, Jean-Luc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 0232

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2026

| Patent document cited in search report | | Publication date | Patent family member(s) | | Publication date |
|---|---|---|---|---|---|
| JP 2015153460 | A | 24-08-2015 | JP | 6310716 B2 | 11-04-2018 |
| | | | JP | 2015153460 A | 24-08-2015 |
| JP H02301972 | A | 14-12-1990 | NONE | | |

EPO FORM P0459

For more details about this annex : see Official Journal of the European Patent Office, No. 12/82